# EUROPEAN PATENT APPLICATION

(11) **EP 4 437 820 A1**
(43) Date of publication of application: **02.10.2024**
(21) Application number: 22904089.4
(22) Date of filing: 28.11.2022
(51) Int. Cl.: A01B 69/00, G05D 1/02, G01C 21/34, G06Q 50/02

(54) **ROUTE PLANNING SYSTEM FOR AUTOMATICALLY OPERATED FARM MACHINE**

(30) Priority: 06.12.2021 JP 2021197898; 06.12.2021 JP 2021197899
(71) Applicant: Kubota Corporation, Osaka 556-8601 (JP)
(72) Inventor: KUBOTA, Yuki, Sakai-shi, Osaka 590-0908 (JP); TAMBO, Toru, Sakai-shi, Osaka 590-0908 (JP); OKUBO, Itsuki, Sakai-shi, Osaka 590-0908 (JP); OTA, Kazuki, Sakai-shi, Osaka 590-0908 (JP)
(74) Representative: Cabinet Beau de Loménie
(86) International application number: PCT/JP2022/043810
(87) International publication number: WO 2023/106158

(57) **Abstract**

A path planning system is for an agricultural machine performing self-driving and includes a storage device to store a map including a plurality of fields, a plurality of waiting areas, and a road connecting the plurality of fields and the plurality of waiting areas to each other; and a processing unit to generate a path on the map for the agricultural machine for each of working days. The processing unit determines, from the plurality of waiting areas, a specific waiting area to which the agricultural machine is to move after performing a final task of agricultural work on each working day, based on information representing at least one of a growing state of crop in the plurality of fields, a state of progress of agricultural work in the plurality of fields, a state of planting in the plurality of fields and a state of weather, and generates a path from the field where the final task of agricultural work is to be performed, to the specific waiting area.

## Description

### TECHNICAL FIELD

The present disclosure relates to path planning systems for agricultural machines performing self-driving.

### BACKGROUND ART

Research and development has been directed to the automation of agricultural machines to be used in agricultural fields. For example, work vehicles, such as tractors, combines, and rice transplanters, which automatically travel within fields by utilizing a positioning system, e.g. , a GNSS (Global Navigation Satellite System), are coming into practical use. Research and development is also under way for work vehicles which automatically travel not only within fields, but also outside the fields.

Patent Documents 1 and 2 each disclose an example of system to cause an unmanned work vehicle to automatically travel between two fields separated from each other with a road being sandwiched therebetween.

### CITATION LIST

### PATENT LITERATURE

[Patent Document 1] Japanese Laid-Open Patent Publications No. 2021-073602
[Patent Document 2] Japanese Laid-Open Patent Publications No. 2021-029218

### SUMMARY OF INVENTION

### TECHNICAL PROBLEM

The present disclosure provides techniques to allow path planning, for agricultural machines performing self-driving, to be performed more efficiently.

### SOLUTION TO PROBLEM

A path planning system according to an embodiment of the present disclosure is a path planning system for an agricultural machine performing self-driving. The path planning system includes a storage device to store a map including a plurality of fields, a plurality of waiting areas, and a road connecting the plurality of fields and the plurality of waiting areas to each other; and a processing unit to generate a path on the map for the agricultural machine for each of working days. The processing unit determines, from the plurality of waiting areas, a specific waiting area to which the agricultural machine is to move after performing a final task of agricultural work on each working day, based on information representing at least one of a growing state of crop in the plurality of fields, a state of progress of agricultural work in the plurality of fields, a state of planting in the plurality of fields, or a state of weather, and generates a path from the field where the final task of agricultural work is to be performed, to the specific waiting area.

A path planning system according to another embodiment of the present disclosure is a path planning system for an agricultural machine performing self-driving over a plurality of districts. The path planning system includes a storage device to store a map of a region including the plurality of districts, and a processing unit. The processing unit determines a period when the agricultural machine is to perform agricultural work in each of the plurality of districts, based on information representing a rough guideline for the period for each of the districts for the agricultural work to be performed by the agricultural machine, and generates a path on the map for the agricultural machine such that the agricultural machine performs the agricultural work in the period determined for each district.

General or specific aspects of the present disclosure may be implemented using a device, a system, a method, an integrated circuit, a computer program, a non-transitory computer-readable storage medium, or any combination thereof. The computer-readable storage medium may be inclusive of a volatile storage medium or a non-volatile storage medium. The device may include a plurality of devices. In the case where the device includes two or more devices, the two or more devices may be disposed within a single apparatus, or divided over two or more separate apparatuses.

### ADVANTAGEOUS EFFECTS OF INVENTION

According to embodiments of the present disclosure, it is possible to achieve more efficient path planning for agricultural machines performing self-driving.

### BRIEF DESCRIPTION OF DRAWINGS

[FIG. **1]** FIG. **1** is a diagram providing an overview of an agriculture management system according to a first illustrative embodiment of the present disclosure.
[FIG. **2]** FIG. **2** is a side view schematically showing an example of work vehicle and an example of an implement that is linked to the work vehicle.
[FIG. **3]** FIG. **3** is a block diagram showing an example configuration of the work vehicle and the implement.
[FIG. **4]** FIG. **4** is a conceptual diagram showing an example of the work vehicle performing positioning based on an RTK-GNSS.
[FIG. **5]** FIG. **5** is a diagram showing an example of an operational terminal and an example of operation switches disposed in a cabin.
[FIG. **6]** FIG. **6** is a block diagram showing an example of hardware configuration of a management device and a terminal device.
[FIG. **7]** FIG. **7** is a diagram schematically showing an example of the work vehicle automatically traveling along a target path inside a field.
[FIG. **8]** FIG. **8** is a flowchart showing an example operation of steering control during self-driving.
[FIG. **9A]** FIG. **9A** is a diagram showing an example of the work vehicle traveling along a target path **P.**
[FIG. **9B]** FIG. **9B** is a diagram showing an example of the work vehicle at a position which is shifted rightward from the target path **P.**
[FIG. **9C]** FIG. **9C** is a diagram showing an example of the work vehicle at a position which is shifted leftward from the target path **P.**
[FIG. **9D]** FIG. **9D** is a diagram showing an example of the work vehicle oriented in an inclined direction with respect to the target path **P.**
[FIG. **10]** FIG. **10** is a diagram schematically showing an example of state where a plurality of the work vehicles perform self-traveling inside a field and on a road outside the field.
[FIG. **11]** FIG. **11** is a diagram showing an example of setting screen displayed on the terminal device.
[FIG. **12]** FIG. **12** is a table showing an example of schedule of agricultural work created by the management device.
[FIG. **13]** FIG. **13** is a diagram showing an example of map that is referred to at the time of path planning.
[FIG. **14]** FIG. **14** is a diagram showing an example of global path.
[FIG. **15]** FIG. **15** is a diagram showing another example of global path.
[FIG. **16]** FIG. **16** is a diagram showing an example of global path and an example of local path generated in an environment where an obstacle exists.
[FIG. **17]** FIG. **17** shows another example of map of a district including a plurality of waiting areas.
[FIG. **18]** FIG. **18** shows an example of table providing the correspondence between waiting areas and fields.
[FIG. **19]** FIG. **19** shows an example of map explicitly showing the correspondence between waiting areas and fields.
[FIG. **20]** FIG. **20** shows an example of table used to manage a growing state of crop in each field.
[FIG. **21]** FIG. **21** shows a table providing an example of distribution of working days for a plurality of fields, the table corresponding to the example shown in FIG. **20****.**
[FIG. **22]** FIG. **22** shows an example of table used to manage a state of progress of agricultural work in each field.
[FIG. **23]** FIG. **23** shows an example of distribution of working days for a plurality of fields, the table corresponding to the example shown in FIG. **22****.**
[FIG. **24]** FIG. **24** shows an example of relationship between planting information and the number of fields belonging to each waiting area.
[FIG. **25]** FIG. **25** shows an example of distribution of working days for a plurality of fields, the table corresponding to the example shown in FIG. **24****.**
[FIG. **26]** FIG. **26** shows an example of relationship between the state of weather and specific waiting areas on each working day.
[FIG. **27]** FIG. **27** shows an example of the days when the agricultural work is to be performed and the selected specific waiting areas in the example shown in FIG. **26****.**
[FIG. **28]** FIG. **28** is a flowchart showing an example operation performed by the management device.
[FIG. **29]** FIG. **29** is a diagram providing an overview of an agriculture management system according to a second illustrative embodiment of the present disclosure.
[FIG. **30]** FIG. **30** is a flowchart showing an example operation performed by the management device.
[FIG. **31]** FIG. **31** is a diagram showing an example of region where the agricultural machines move.
[FIG. **32]** FIG. **32** shows an example of information representing a rough guideline for the period for agricultural work for each district.
[FIG. **33]** FIG. **33** shows another example of information representing a rough guideline for the period for agricultural work for each district.
[FIG. **34]** FIG. **34** shows an example of work plan for each task of agricultural work.
[FIG. **35]** FIG. **35** shows an example of setting screen displayed on the termina device.
[FIG. **36]** FIG. **36** shows an example of map referred to at the time of path planning.

### DESCRIPTION OF EMBODIMENTS

### (Definition of terms)

In the present disclosure, an "agricultural machine" refers to a machine for agricultural applications. Examples of agricultural machines include tractors, harvesters, rice transplanters, vehicles for crop management, vegetable transplanters, mowers, seeders, spreaders, agricultural drones, and mobile robots for agriculture. Not only may a work vehicle such as a tractor function as an "agricultural machine" alone by itself, but also a combination of a work vehicle and an implement that is attached to, or towed by, the work vehicle may function as an "agricultural machine". For the ground surface inside a field, the agricultural machine performs agricultural work such as tilling, seeding, preventive pest control, manure spreading, planting of crops, or harvesting. Such agricultural work or tasks may be referred to as "groundwork", or simply as "work" or "tasks". Travel of a vehicle-type agricultural machine performed while the agricultural machine also performs agricultural work may be referred to as "tasked travel".

"Self-driving" refers to controlling the movement of an agricultural machine by the action of a controller, rather than through manual operations of a driver. An agricultural machine that performs self-driving may be referred to as a "self-driving agricultural machine" or a "robotic agricultural machine". During self-driving, not only the movement of the agricultural machine, but also the operation of agricultural work (e.g., the operation of the implement) may be controlled automatically. In the case where the agricultural machine is a vehicle- type machine, travel of the agricultural machine via self-driving will be referred to as "self - traveling". The controller may control at least one of: steering that is required in the movement of the agricultural machine, adjustment of the moving speed, or beginning and ending of a move. In the case of controlling a work vehicle having an implement attached thereto, the controller may be configured or programmed to control raising or lowering of the implement, beginning and ending of an operation of the implement, and so on. A move based on self-driving may include not only moving of an agricultural machine that goes along a predetermined path toward a destination, but also moving of an agricultural machine that follows a target of tracking. An agricultural machine that performs self -driving may also move partly based on the user's instructions. Moreover, an agricultural machine that performs self-driving may operate not only in a self-driving mode but also in a manual driving mode, where the agricultural machine moves through manual operations of the driver. When performed not manually but through the action of a controller, the steering of an agricultural machine will be referred to as "automatic steering". A portion of, or the entirety of, the controller may reside outside the agricultural machine. Control signals, commands, data, etc., may be communicated between the agricultural machine and a controller residing outside the agricultural machine. An agricultural machine that performs self-driving may move autonomously while sensing the surrounding environment, without any person being involved in the controlling of the movement of the agricultural machine. An agricultural machine that is capable of autonomous movement is able to travel inside the field or outside the field (e.g., on roads) in an unmanned manner. During an autonomous move, operations of detecting and avoiding obstacles may be performed.

A "work plan" is data defining a plan of one or more tasks of agricultural work to be performed by an agricultural machine. The work plan may include, for example, information representing the order of the tasks of agricultural work to be performed by an agricultural machine or the field where each of the tasks of agricultural work is to be performed. The work plan may include information representing the time and the date when each of the tasks of agricultural work is to be performed. In particular, the work plan including information representing the time and the date when each of the tasks of agricultural work is to be performed is referred to as a "work schedule" or simply as a "schedule". The work schedule may include information representing the time when each task of agricultural work is to be begun and/or ended on each of working days. The work plan or the work schedule may include information representing, for each task of agricultural work, the contents of the task, the implement to be used, and/or the types and amounts of agricultural supplies to be used. As used herein, the term "agricultural supplies" refers to goods used for agricultural work to be performed by an agricultural machine. The agricultural supplies may also be referred to simply as "supplies". The agricultural supplies may include goods consumed by agricultural work such as, for example, agricultural chemicals, fertilizers, seeds, or seedlings. The work plan may be created by a processing unit communicating with the agricultural machine to manage the agricultural machine or a processing unit mounted on the agricultural machine. The processing unit can create a work plan based on, for example, information input by the user (agricultural business executive, agricultural worker, etc.) manipulating a terminal device. In this specification, the processing unit communicating with the agricultural machine to manage the agricultural machine will be referred to as a "management device" . The management device may manage agricultural work of a plurality agricultural machines. In this case, the management device may create a work plan including information on each task of agricultural work to be performed by each of the plurality of agricultural machines. The work plan may be downloaded to each of the agricultural machines and stored in a storage device in each of the agricultural machines . In order to perform the scheduled agricultural work in accordance with the work plan, each agricultural machine can automatically move to a field and perform the agricultural work.

An "environment map" is data representing, with a predetermined coordinate system, the position or the region of an object existing in the environment where the agricultural machine moves. The environment map may be referred to simply as a "map" or "map data". The coordinate system defining the environment map is, for example, a world coordinate system such as a geographic coordinate system fixed to the globe. Regarding the object existing in the environment, the environment map may include information other than the position (e.g., attribute information or other types of information). The "environment map" encompasses various type of maps such as a point cloud map and a lattice map. Data on a local map or a partial map that is generated or processed in a process of constructing the environment map is also referred to as a "map" or "map data".

A "global path" is data on a path connecting a departure point to a target point of an automatic movement of the agricultural machine, and is generated by a processing unit performing path planning. Generation of such a global path is referred to as "global path planning". In the following description, the global path will be referred to also as a "target path" or simply as a "path" . The global path may be defined by, for example, coordinate values of a plurality of points which the agricultural machine is to pass. Such a point that the agricultural machine is to pass is referred as a "waypoint", and a line segment connecting waypoints adjacent to each other is referred to as a "link".

A "local path" is a path by which the agricultural machine can avoid an obstacle, and is consecutively generated while the agricultural machine is automatically moving along the global path. Generation of such a local path is referred to as "local path planning" . The local path is consecutively generated based on data acquired by one or more sensing devices included in the agricultural machine, during a movement of the agricultural machine. The local path may be def ined by a plurality of waypoints along a portion of the global path. Note that in the case where there is an obstacle in the vicinity of the global path, the waypoints may be set so as to detour around the obstacle. The length of a link between the waypoints on the local path is shorter than the length of a link between the waypoints on the global path. The device generating the local path may be the same as, or different from, the device generating the global path. For example, the management device managing the agricultural work to be performed by the agricultural machine may generate the global path, whereas the controller mounted on the agricultural machine may generate the local path.

A "waiting area" is a site provided for an agricultural machine to wait while the agricultural machine does not perform agricultural work. One or more waiting areas may be provided in an environment where an agricultural machine performs self -driving. The waiting area may be, for example, a warehouse, a garage, a barn, a parking area, or any other facilities. The waiting area may be managed or used jointly by a plurality of users . The waiting area may be a warehouse, a barn, a garage or a parking area at a house or an office of an agricultural worker different from the user of the agricultural machine. Alternatively, the waiting area may be run by a business operator that provides a service of renting a self -driving agricultural machine to the user. A plurality of waiting areas may be scattered in the environment where an agricultural machine moves. In the waiting area, work such as replacement or maintenance of a part or an implement of the agricultural machine, or supplement of supplies, may be performed. In this case, parts, tools or supplies necessary for the work may be provided in the waiting area.

### (Embodiments)

Hereinafter, embodiments of the present disclosure will be described. Note, however, that unnecessarily detailed descriptions may be omitted. For example, detailed descriptions on what is well known in the art or redundant descriptions on what is substantially the same configuration may be omitted. This is to avoid lengthy description, and facilitate the understanding of those skilled in the art. The accompanying drawings and the following description, which are provided by the present inventors so that those skilled in the art can sufficiently understand the present disclosure, are not intended to limit the scope of the claims. In the following description, elements having identical or similar functions are denoted by identical reference numerals.

The following embodiments are only exemplary, and the techniques according to the present disclosure are not limited to the following embodiments. For example, numerical values, shapes, materials, steps, orders of steps, layout of a display screen, etc., which are indicated in the following embodiments are only exemplary, and admit of various modifications so long as it makes technological sense. Any one implementation may be combined with another so long as it makes technological sense to do so.

Hereinafter, embodiments in which techniques according to the present disclosure are applied to a work vehicle, such as a tractor, which is an example of agricultural machine, will be mainly described. The techniques according to the present disclosure are also applicable to other types of agricultural machines in addition to the work vehicle such as a tractor. The agricultural machine may be, for example, an agricultural drone, that is, an unmanned aerial vehicle (UAV) . The agricultural drone may be used for agricultural work that may be performed from the air such as seeding, spraying of fertilizers or spraying of agricultural chemicals. The agricultural drone may be used to sense the growing state of crop from the air. Such a drone is encompassed in the agricultural machine according to the present disclosure.

### (Embodiment 1)

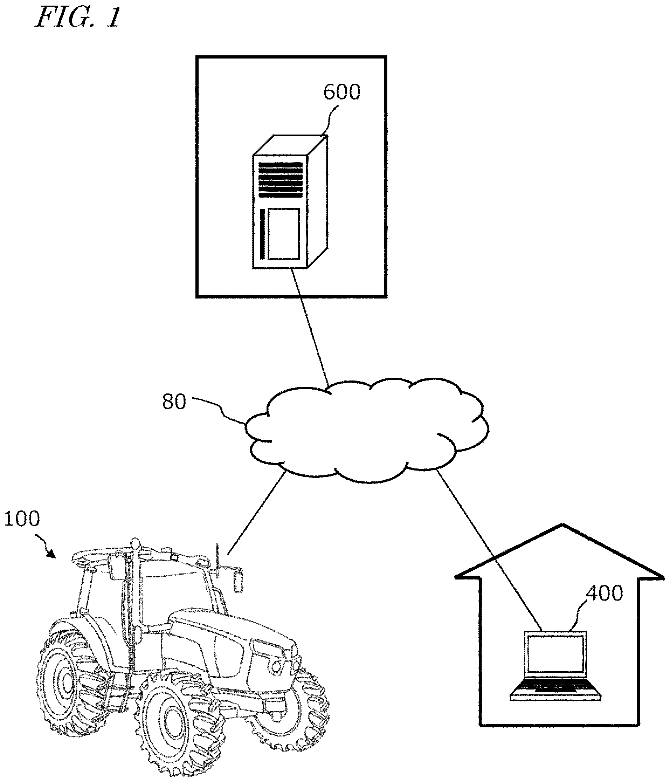

FIG. **1** is a diagram providing an overview of an agriculture management system according to an illustrative embodiment of the present disclosure. The agriculture management system shown in FIG. **1** includes an agricultural machine **100,** a terminal device **400,** and a management device **600.** The terminal device **400** is a computer used by a user of the agricultural machine **100.** The management device **600** is a computer managed by a business operator running the agriculture management system. The agricultural machine **100,** the terminal device **400** and the management device **600** can communicate with each other via a network **80.** FIG. **1** shows one agricultural machine **100,** but the agriculture management system may include a plurality of the agricultural machines.

The agricultural machine **100** according to the present embodiment is a tractor. The agricultural machine **100** may be a work vehicle other than a tractor or any other type of agricultural machine. The agricultural machine **100** can have an implement attached to its rear and/or its front. While performing agricultural work in accordance with a particular type of implement, the agricultural machine **100** is able to travel inside a field. The agricultural machine **100** may travel inside the field or outside the field with no implement being attached thereto.

The agricultural machine **100** has a self-driving function. In other words, the agricultural machine **100** can travel by the action of a controller, rather than manually. The controller according to the present embodiment is provided inside the agricultural machine **100,** and is able to control both the speed and steering of the agricultural machine **100.** The agricultural machine **100** can perform self-traveling outside the field (e.g., on roads) as well as inside the field.

The agricultural machine **100** includes a device usable for positioning or localization, such as a GNSS receiver or an LiDAR sensor. Based on the position of the agricultural machine **100** and information on a target path generated by the management device **600,** the controller of the agricultural machine **100** causes the agricultural machine **100** to automatically travel. In addition to controlling the travel of the agricultural machine **100,** the controller also controls the operation of the implement. As a result, while automatically traveling inside the field, the agricultural machine **100** is able to perform agricultural work by using the implement. In addition, the agricultural machine **100** is able to automatically travel along the target path on a road outside the field (e.g. , an agricultural road or a general road) . In the case of performing self-traveling on a road outside the field, the agricultural machine **100** travels while generating, along the target path, a local path along which the agricultural machine **100** can avoid an obstacle, based on data output from a sensing device such as a camera or a LiDAR sensor. Inside the field, the agricultural machine **100** may travel while generating a local path in substantially the same manner as described above, or may perform an operation of traveling along the target path without generating a local path and halting when an obstacle is detected.

The management device **600** is a computer to manage the agricultural work performed by the agricultural machine **100.** The management device **600** may be, for example, a server computer that performs centralized management on information regarding the field and the agricultural work on the cloud and supports agriculture by use of the data on the cloud. The management device **600,** for example, creates a work plan for the agricultural machine **100** and performs global path planning for the agricultural machine **100** in accordance with the work plan.

The management device **600** generates a global path (target path) inside the field and a global path (target path) outside the field by different methods from each other. The management device **600** generates a target path inside the field based on information regarding the field. For example, the management device **600** can generate a target path inside the field based on various types of previously registered information such as the outer shape of the field, the area size of the field, the position of the entrance/exit of the field, the width of the agricultural machine **100,** the width of the implement, the contents of the work, the types of crops to be grown, the region where the crops are to be grown, the growing state of crop, and the interval between rows or ridges of the crops. The management device **600** generates a target path inside the field based on, for example, information input by the user by use of the terminal device **400** or any other device. The management device **600** may generate a path inside the field such that the path covers, for example, the entirety of a work area where the work is to be performed. Alternatively, inside the field, the management device **600** may generate a target path only outside the work area and does not need to generate a target path inside the work area. In this case, the agricultural machine **100** may recognize rows or ridges of the crops based on the data output from the camera or the LiDAR sensor, and travel while generating a local path along the recognized rows or ridges of the crops. Meanwhile, the management device **600** generates a path outside the field in accordance with the work plan. For example, the management device **600** can generate a target path outside the field based on various types of information such as the order of tasks of agricultural work indicated by the work plan, the position of the field where each task of agricultural work is to be performed, the position of the entrance/exit of the field, the time when each task of agricultural work is to begin and/or end, the state of the road surface, the state of weather or the traffic state.

In addition, the management device **600** may generate or edit an environment map based on data collected by the agricultural machine **100** or any other movable body by use of the sensing device such as a LiDAR sensor. The management device **600** transmits data on the work plan, the target path and the environment map thus generated to the agricultural machine **100.** The agricultural machine **100** automatically moves and performs agricultural work based on the data.

The global path planning and the generation (or editing) of the environment map may be performed by any other device than the management device **600.** For example, the controller of the agricultural machine **100** may perform global path planning, or the generation or editing of the environment map. As described above, a device generating an environment map, a device generating a work plan and a device performing path planning may be dispersedly located at different sites.

The terminal device **400** is a computer that is used by a user who is at a remote place from the agricultural machine **100.** The terminal device **400** shown in FIG. **1** is a laptop computer, but the terminal device **400** is not limited to this. The terminal device **400** may be a stationary computer such as a desktop PC (personal computer), or a mobile terminal such as a smartphone or a tablet computer. The terminal device **400** displays, on the display screen thereof, a setting screen allowing the user to input information necessary to create a work plan (e.g., a schedule of each task of agricultural work) for the agricultural machine **100.** When the user inputs necessary information to the setting screen and performs a manipulation to transmit the information, the terminal device **400** transmits the input information to the management device **600.** The management device **600** creates a work plan based on the information. The terminal device **400** may also be used to register one or more fields where the agricultural machine **100** is to perform the agricultural work.

Hereinafter, a configuration and an operation of the system according to the present embodiment will be described in more detail.

### [1. Configuration]

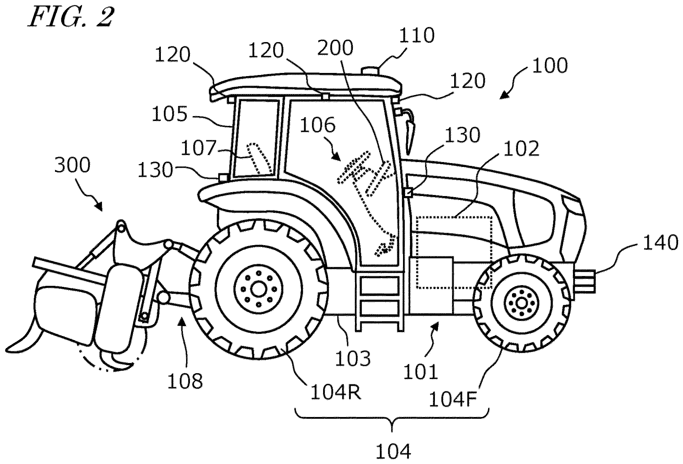

FIG. **2** is a side view schematically showing an example of the agricultural machine **100** and an example of implement **300** linked to the agricultural machine **100.** The agricultural machine **100** according to the present embodiment can operate both in a manual driving mode and a self - driving mode. In the self - driving mode, the agricultural machine **100** is able to perform unmanned travel. The agricultural machine 100 can perform self-driving both inside a field and outside the field.

As shown in FIG. **2****,** the agricultural machine **100** includes a vehicle body **101,** a prime mover (engine) **102,** and a transmission **103.** On the vehicle body **101,** wheels **104** with tires and a cabin **105** are provided. The wheels **104** include a pair of front wheels **104F** and a pair of rear wheels **104R.** Inside the cabin **105,** a driver's seat **107,** a steering device **106,** an operational terminal **200,** and switches for manipulation are provided. In the case where the agricultural machine **100** performs tasked travel inside the field, the front wheels **104F** and/or the rear wheels **104R** may have crawlers, rather than tires, attached thereto.

The agricultural machine **100** includes a plurality of sensing devices sensing the surroundings of the agricultural machine **100.** In the example shown in FIG. **2****,** the sensing devices include a plurality of cameras **120,** a LiDAR sensor **140,** and a plurality of obstacle sensors **130.**

The cameras **120** may be provided at the front/rear/right/left of the agricultural machine **100,** for example. The cameras **120** image the surrounding environment of the agricultural machine **100** and generate image data. The images acquired by the cameras **120** may be transmitted to the terminal device **400,** which is responsible for remote monitoring. The images may be used to monitor the agricultural machine **100** during unmanned driving. The cameras **120** may also be used to generate images to allow the agricultural machine **100,** traveling on a road outside the field (an agricultural road or a general road), to recognize objects, obstacles, white lines, road signs, traffic signs or the like in the surroundings of the agricultural machine **100.**

The LiDAR sensor **140** in the example shown in FIG. **2** is disposed on a bottom portion of a front surface of the vehicle body **101.** The LiDAR sensor **140** may be disposed at any other position. While the agricultural machine **100** is traveling mainly outside the field, the LiDAR sensor **140** repeatedly outputs sensor data representing the distance and the direction between an obj ect existing in the surrounding environment thereof and each of measurement points, or a two-dimensional or three-dimensional coordinate values of each of the measurement points . The sensor data output from the LiDAR sensor **140** is processed by the controller of the agricultural machine **100.** The controller can perform localization of the agricultural machine **100** by matching the sensor data against the environment map. The controller can further detect an object such as an obstacle existing in the surroundings of the agricultural machine **100** based on the sensor data, and generate, along the global path, a local path along which the agricultural machine **100** needs to actually proceed. The controller can utilize an algorithm such as, for example, SLAM (Simultaneous Localization and Mapping) to generate or edit an environment map. The agricultural machine **100** may include a plurality of LiDAR sensors disposed at different positions with different orientations.

The plurality of obstacle sensors **130** shown in FIG. **2** are provided at the front and the rear of the cabin **105.** The obstacle sensors **130** may be disposed at other positions. For example, one or more obstacle sensors **130** may be disposed at any position at the sides, the front or the rear of the vehicle body **101.** The obstacle sensors **130** may include, for example, a laser scanner or an ultrasonic sonar. The obstacle sensors **130** may be used to detect obstacles in the surroundings of the agricultural machine **100** during self-traveling to cause the agricultural machine **100** to halt or detour around the obstacles. The LiDAR sensor **140** may be used as one of the obstacle sensors **130.**

The agricultural machine **100** further includes a GNSS unit **110.** The GNSS unit **110** includes a GNSS receiver. The GNSS receiver may include an antenna to receive a signal (s) from a GNSS satellite(s) and a processor to calculate the position of the agricultural machine **100** based on the signal(s) received by the antenna. The GNSS unit **110** receives satellite signals transmitted from the plurality of GNSS satellites, and performs positioning based on the satellite signals. GNSS is the general term for satellite positioning systems such as GPS (Global Positioning System), QZSS (Quasi-Zenith Satellite System; e.g., MICHIBIKI), GLONASS, Galileo, and BeiDou. Although the GNSS unit **110** according to the present embodiment is disposed above the cabin **105,** it may be disposed at any other position.

The GNSS unit **110** may include an inertial measurement unit (IMU). Signals from the IMU can be used to complement position data. The IMU can measure a tilt or a small motion of the agricultural machine **100.** The data acquired by the IMU can be used to complement the position data based on the satellite signals, so as to improve the performance of positioning.

The controller of the agricultural machine **100** may utilize, for positioning, the sensing data acquired by the sensing devices such as the cameras **120** or the LIDAR sensor **140,** in addition to the positioning results provided by the GNSS unit **110.** In the case where objects serving as characteristic points exist in the environment that is traveled by the agricultural machine **100,** as in the case of an agricultural road, a forest road, a general road or an orchard, the position and the orientation of the agricultural machine **100** can be estimated with a high accuracy based on data that is acquired by the cameras **120** or the LiDAR sensor **140** and on an environment map that is previously stored in the storage device. By correcting or complementing position data based on the satellite signals using the data acquired by the cameras **120** or the LiDAR sensor **140,** it becomes possible to identify the position of the agricultural machine **100** with a higher accuracy.

The prime mover **102** may be a diesel engine, for example. Instead of a diesel engine, an electric motor may be used. The transmission **103** can change the propulsion and the moving speed of the agricultural machine **100** through a speed changing mechanism. The transmission **103** can also switch between forward travel and backward travel of the agricultural machine **100.**

The steering device **106** includes a steering wheel, a steering shaft connected to the steering wheel, and a power steering device to assist in the steering by the steering wheel. The front wheels **104F** are the steered wheels, such that changing their angle of turn (also referred to as "steering angle") can cause a change in the traveling direction of the agricultural machine **100.** The steering angle of the front wheels **104F** can be changed by manipulating the steering wheel. The power steering device includes a hydraulic device or an electric motor to supply an assisting force to change the steering angle of the front wheels **104F.** When automatic steering is performed, under the control of the controller disposed in the agricultural machine **100,** the steering angle may be automatically adjusted by the power of the hydraulic device or the electric motor.

A linkage device **108** is provided at the rear of the vehicle body **101.** The linkage device **108** includes, e.g., a three-point linkage (also referred to as a "three-point link" or a "three-point hitch"), a PTO (Power Take Off) shaft, a universal joint, and a communication cable. The linkage device **108** allows the implement **300** to be attached to, or detached from, the agricultural machine **100.** The linkage device **108** is able to raise or lower the three-point link with a hydraulic device, for example, thus changing the position and/or attitude of the implement **300.** Moreover, motive power can be sent from the agricultural machine **100** to the implement **300** via the universal joint. While towing the implement **300,** the agricultural machine **100** allows the implement **300** to perform a predetermined task. The linkage device may be provided frontward of the vehicle body **101.** In that case, the implement can be connected frontward of the agricultural machine **100.**

Although the implement **300** shown in FIG. **2** is a rotary tiller, the implement **300** is not limited to a rotary tiller. For example, any arbitrary implement such as a seeder, a spreader, a transplanter, a mower, a rake implement, a baler, a harvester, a sprayer, or a harrow, can be connected to the agricultural machine **100** for use.

The agricultural machine **100** shown in FIG. **2** can be driven by human driving; alternatively, it may only support unmanned driving. In that case, component elements which are only required for human driving, e.g., the cabin **105,** the steering device **106,** and the driver's seat **107** do not need to be provided in the agricultural machine **100.** An unmanned agricultural machine **100** can travel via autonomous driving, or by remote operation by a user.

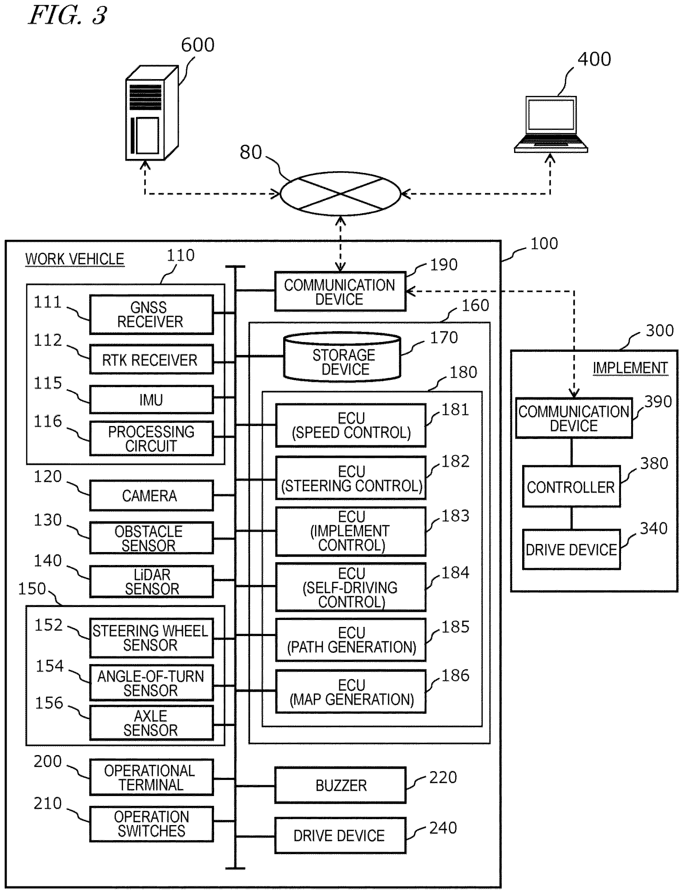

FIG. **3** is a block diagram showing an example configuration of the agricultural machine **100** and the implement **300.** The agricultural machine **100** and the implement **300** can communicate with each other via a communication cable that is included in the linkage device **108.** The agricultural machine **100** is able to communicate with the terminal device **400** and the management device **600** via the network **80.**

In addition to the GNSS unit **110,** the cameras **120,** the obstacle sensors **130,** the LiDAR sensor **140** and the operational terminal **200,** the agricultural machine **100** in the example of FIG. **3** includes sensors **150** to detect the operating status of the agricultural machine **100,** a control system **160,** a communication device **190,** operation switches **210,** a buzzer **220,** and a drive device **240.** These component elements are communicably connected to each other via a bus . The GNSS unit **110** includes a GNSS receiver **111,** an RTK receiver **112,** an inertial measurement unit (IMU) **115,** and a processing circuit **116.** The sensors **150** include a steering wheel sensor **152,** an angle-of-turn sensor **154,** and an axle sensor **156.** The control system **160** includes a storage device **170** and a controller **180.** The controller **180** includes a plurality of electronic control units (ECU) **181** to **186.** The implement **300** includes a drive device **340,** a controller **380,** and a communication device **390.** Note that FIG. **3** shows component elements which are relatively closely related to the operations of self-driving by the agricultural machine **100,** while other components are omitted from illustration.

The GNSS receiver **111** in the GNSS unit **110** receives satellite signals transmitted from the plurality of GNSS satellites and generates GNSS data based on the satellite signals . The GNSS data is generated in a predetermined format such as, for example, the NMEA-0183 format. The GNSS data may include, for example, the identification number, the angle of elevation, the azimuth angle, and a value representing the reception strength of each of the satellites from which the satellite signals are received.

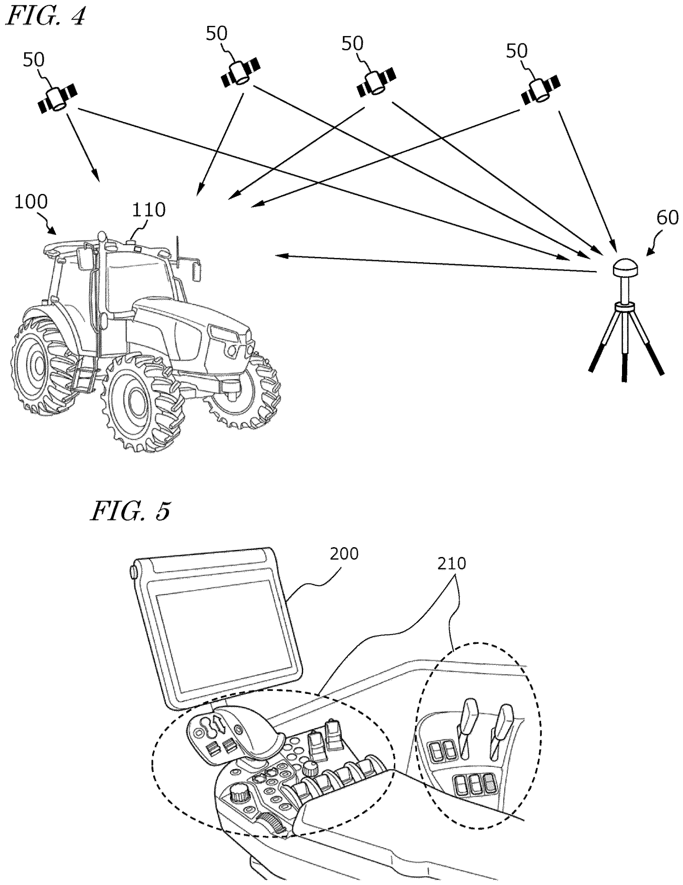

The GNSS unit **110** shown in FIG. **3** performs positioning of the agricultural machine **100** by utilizing an RTK (Real Time Kinematic)-GNSS. FIG. **4** is a conceptual diagram showing an example of the agricultural machine **100** performing positioning based on the RTK-GNSS. In the positioning based on the RTK-GNSS, not only satellite signals transmitted from a plurality of GNSS satellites **50,** but also a correction signal that is transmitted from a reference station **60** is used. The reference station **60** may be disposed near the field where the agricultural machine **100** performs tasked travel (e.g., at a position within 10 km of the agricultural machine **100).** The reference station **60** generates a correction signal of, for example, an RTCM format based on the satellite signals received from the plurality of GNSS satellites **50,** and transmits the correction signal to the GNSS unit **110.** The RTK receiver **112,** which includes an antenna and a modem, receives the correction signal transmitted from the reference station **60.** Based on the correction signal, the processing circuit **116** of the GNSS unit **110** corrects the results of the positioning performed by use of the GNSS receiver **111.** Use of the RTK-GNSS enables positioning with an accuracy on the order of several centimeters of errors, for example. Positional information including latitude, longitude, and altitude information is acquired through the highly accurate positioning by the RTK-GNSS. The GNSS unit **110** calculates the position of the agricultural machine **100** as frequently as, for example, one to ten times per second.

Note that the positioning method is not limited to being performed by use of an RTK-GNSS; any arbitrary positioning method (e.g. , an interferometric positioning method or a relative positioning method) that provides positional inf ormation with the necessary accuracy can be used. For example, positioning may be performed by utilizing a VRS (Virtual Reference Station) or a DGPS (Differential Global Positioning System). In the case where positional information with the necessary accuracy can be obtained without the use of the correction signal transmitted from the reference station **60,** positional information may be generated without using the correction signal. In that case, the GNSS unit **110** does not need to include the RTK receiver **112.**

Even in the case where the RTK-GNSS is used, at a site where the correction signal from the reference station **60** cannot be acquired (e.g., on a road far from the field), the position of the agricultural machine **100** is estimated by another method with no use of the signal from the RTK receiver **112.** For example, the position of the agricultural machine **100** may be estimated by matching the data output from the LiDAR sensor **140** and/or the cameras **120** against a highly accurate environment map.

The GNSS unit **110** according to the present embodiment further includes the IMU **115.** The IMU **115** may include a 3-axis accelerometer and a 3-axis gyroscope. The IMU **115** may include a direction sensor such as a 3-axis geomagnetic sensor. The IMU **115** functions as a motion sensor which can output signals representing parameters such as acceleration, velocity, displacement, and attitude of the agricultural machine **100.** Based not only on the satellite signals and the correction signal but also on a signal that is output from the IMU **115,** the processing circuit **116** can estimate the position and orientation of the agricultural machine **100** with a higher accuracy. The signal that is output from the IMU **115** may be used for the correction or complementation of the position that is calculated based on the satellite signals and the correction signal. The IMU **115** outputs a signal more frequently than the GNSS receiver **111.** Utilizing this signal that is output highly frequently, the processing circuit **116** allows the position and orientation of the agricultural machine **100** to be measured more frequently (e.g., about 10 Hz or above). Instead of the IMU **115,** a 3-axis accelerometer and a 3-axis gyroscope may be separately provided. The IMU **115** may be provided as a separate device from the GNSS unit **110.**

The cameras **120** are imagers that image the surrounding environment of the agricultural machine **100.** Each of the cameras **120** includes an image sensor such as a CCD (Charge Coupled Device) or a CMOS (Complementary Metal Oxide Semiconductor), for example. In addition, each camera **120** may include an optical system including one or more lenses and a signal processing circuit. During travel of the agricultural machine **100,** the cameras **120** image the surrounding environment of the agricultural machine **100,** and generate image data (e.g. , motion picture data) . The cameras **120** are able to capture motion pictures at a frame rate of 3 frames/second (fps: frames per second) or greater, for example. The images generated by the cameras **120** may be used by a remote supervisor to check the surrounding environment of the agricultural machine **100** with the terminal device **400,** for example. The images generated by the cameras **120** may also be used for the purpose of positioning and/or detection of obstacles. As shown in FIG. **2****,** the plurality of cameras **120** may be provided at different positions on the agricultural machine **100,** or a single camera **120** may be provided. A visible camera(s) to generate visible light images and an infrared camera(s) to generate infrared images may be separately provided. Both of a visible camera(s) and an infrared camera(s) may be provided as cameras for generating images for monitoring purposes. The infrared camera (s) may also be used for detection of obstacles at nighttime.

The obstacle sensors **130** detect objects existing in the surroundings of the agricultural machine **100.** Each of the obstacle sensors **130** may include a laser scanner or an ultrasonic sonar, for example. When an object exists at a position within a predetermined distance from one of the obstacle sensors **130,** the obstacle sensor **130** outputs a signal indicating the presence of the obstacle. The plurality of obstacle sensors **130** may be provided at different positions on the agricultural machine **100.** For example, a plurality of laser scanners and a plurality of ultrasonic sonars may be disposed at different positions on the agricultural machine **100.** Providing such a great number of obstacle sensors **130** can reduce blind spots in monitoring obstacles in the surroundings of the agricultural machine **100.**

The steering wheel sensor **152** measures the angle of rotation of the steering wheel of the agricultural machine **100.** The angle-of-turn sensor **154** measures the angle of turn of the front wheels **104F,** which are the wheels responsible for steering. Measurement values by the steering wheel sensor **152** and the angle-of-turn sensor **154** are used for steering control by the controller **180.**

The axle sensor **156** measures the rotational speed, i.e., the number of revolutions per unit time, of an axle that is connected to the wheels **104.** The axle sensor **156** may be a sensor including a magnetoresistive element (MR), a Hall generator, or an electromagnetic pickup, for example. The axle sensor **156** outputs a numerical value indicating the number of revolutions per minute (unit: rpm) of the axle, for example. The axle sensor **156** is used to measure the speed of the agricultural machine **100.**

The drive device **240** includes various types of devices required to cause the agricultural machine **100** to travel and to drive the implement **300;** for example, the prime mover **102,** the transmission **103,** the steering device **106,** the linkage device **108** and the like described above. The prime mover **102** may include an internal combustion engine such as, for example, a diesel engine. The drive device **240** may include an electric motor for traction instead of, or in addition to, the internal combustion engine.

The buzzer **220** is an audio output device to present an alarm sound to alert the user of an abnormality. For example, the buzzer **220** may present an alarm sound when an obstacle is detected during self-driving. The buzzer **220** is controlled by the controller **180.**

The storage device **170** includes one or more storage mediums such as a flash memory or a magnetic disc. The storage device **170** stores various data that is generated by the GNSS unit **110,** the cameras **120,** the obstacle sensors **130,** the LiDAR sensor **140,** the sensors **150,** and the controller **180.** The data that is stored by the storage device **170** may include map data on the environment where the agricultural machine **100** travels (environment map) and data on a global path (target path) for self-driving. The environment map includes information on a plurality of fields where the agricultural machine **100** performs agricultural work and roads around the fields. The environment map and the target path may be generated by a processor in the management device **600.** The controller **180** according to the present embodiment has a function of generating or editing an environment map and a target path. The controller **180** can edit the environment map and the target path, acquired from the management device **160,** in accordance with the environment where the agricultural machine **100** travels . The storage device **170** also stores data on a work plan received by the communication device **190** from the management device **600.** The work plan includes information on a plurality of tasks of agricultural work to be performed by the agricultural machine **100** over a plurality of working days. The work plan may be, for example, data on a work schedule including information on the time when the agricultural machine **100** is scheduled to perform each task of agricultural work on each of the working days. The storage device **170** also stores a computer program (s) to cause each of the ECUs in the controller **180** to perform various operations described below. Such a computer program(s) may be provided to the agricultural machine **100** via a storage medium (e.g. , a semiconductor memory, an optical disc, etc.) or through telecommunication lines (e.g., the Internet). Such a computer program(s) may be marketed as commercial software.

The controller **180** includes the plurality of ECUs. The plurality of ECUs include, for example, the ECU **181** for speed control, the ECU **182** for steering control, the ECU **183** for implement control, the ECU **184** for self-driving control, the ECU **185** for path generation, and the ECU **186** for map generation.

The ECU **181** controls the prime mover **102,** the transmission **103** and brakes included in the drive device **240,** thus controlling the speed of the agricultural machine **100.**

The ECU **182** controls the hydraulic device or the electric motor included in the steering device **106** based on a measurement value of the steering wheel sensor **152,** thus controlling the steering of the agricultural machine **100.**

In order to cause the implement **300** to perform a desired operation, the ECU **183** controls the operations of the three-point link, the PTO shaft and the like that are included in the linkage device **108.** Also, the ECU **183** generates a signal to control the operation of the implement **300,** and transmits this signal from the communication device **190** to the implement **300.**

Based on data output from the GNSS unit **110,** the cameras **120,** the obstacle sensors **130,** the LiDAR sensor **140** and the sensors **150,** the ECU **184** performs computation and control for achieving self-driving. For example, the ECU **184** specifies the position of the agricultural machine **100** based on the data output from at least one of the GNSS unit **110,** the cameras **120** and the LiDAR sensor **140.** Inside the field, the ECU **184** may determine the position of the agricultural machine **100** based only on the data output from the GNSS unit **110.** The ECU **184** may estimate or correct the position of the agricultural machine **100** based on the data acquired by the cameras **120** or the LiDAR sensor **140.** Use of the data acquired by the cameras **120** or the LiDAR sensor **140** allows the accuracy of the positioning to be further improved. Meanwhile, outside the field, the ECU **184** estimates the position of the agricultural machine **100** by use of the data output from the LiDAR sensor **140** or the cameras **120.** For example, the ECU **184** may estimate the position of the agricultural machine **100** by matching the data output from the LiDAR sensor **140** or the cameras **120** against the environment map. During self-driving, the ECU **184** performs computation necessary for the agricultural machine **100** to travel along a target path or a local path, based on the estimated position of the agricultural machine **100.** The ECU **184** sends the ECU **181** a command to change the speed, and sends the ECU **182** a command to change the steering angle. In response to the command to change the speed, the ECU **181** controls the prime mover **102,** the transmission **103** or the brakes to change the speed of the agricultural machine **100.** In response to the command to change the steering angle, the ECU **182** controls the steering device **106** to change the steering angle.

While the agricultural machine **100** is traveling on the road along the target path, the ECU **185** consecutively generates a local path along which the agricultural machine **100** can avoid an obstacle. During travel of the agricultural machine **100,** the ECU **185** recognizes an obstacle existing in the surroundings of the agricultural machine **100** based on the data output from the cameras **120,** the obstacle sensors **130** and the LiDAR sensor **140.** The ECU **185** generates a local path such that the agricultural machine **100** avoids the recognized obstacle. The ECU **185** may have a function of performing global path planning instead of the management device **160.** In this case, the ECU **185** determines a destination of the agricultural machine **100** based on the work plan stored in the storage device **170,** and determines a target path from a beginning point to a target point of the movement of the agricultural machine **100.** For example, the ECU **185** can generate, as the target path, a path by which the agricultural machine **100** can arrive at the destination within the shortest time period, based on the environment map stored in the storage device **170** and including information on the roads.

The ECU **186** generates or edits a map of the environment where the agricultural machine **100** travels. In the present embodiment, an environment map generated by an external device such as the management device **600** is transmitted to the agricultural machine **100** and recorded in the storage device **170.** Instead, the ECU **186** can generate or edit an environment map. In the case where the ECU **186** generates an environment map, the environment map may be generated based on sensor data output from the LiDAR sensor **140.** For generating an environment map, the ECU **186** consecutively generates three-dimensional point cloud data based on the sensor data output from the LiDAR sensor **140** while the agricultural machine **100** is traveling. The ECU **186** can generate an environment map by connecting the point cloud data consecutively generated by use of an algorithm such as, for example, SLAM. The environment map generated in this manner is a highly accurate three-dimensional map, and may be used for localization performed by the ECU **184.** Based on this three-dimensional map, a two-dimensional map usable for the global path planning may be generated. In this specification, the three-dimensional map that is used for the localization and the two-dimensional map that is used for the global path planning will be both referred to as an "environment map". The ECU **186** can further edit the map by adding, to the map, various types of attribute information on a structural body, the state of the road surface, how easily the road is passable, or the like that is recognized based on the data output from the camera **120** or the LiDAR sensor **140.**

Through the actions of these ECUs, the controller **180** realizes self-driving. During self-driving, the controller **180** controls the drive device **240** based on the measured or estimated position of the agricultural machine **100** and on the target path. As a result, the controller **180** can cause the agricultural machine **100** to travel along the target path.

The plurality of ECUs included in the controller **180** can communicate with each other in accordance with a vehicle bus standard such as, for example, a CAN (Controller Area Network) . Instead of the CAN, faster communication methods such as Automotive Ethernet (registered trademark) may be used. Although the ECUs **181** to **186** are illustrated as individual blocks in FIG. **3****,** the function of each of the ECU **181** to **186** may be implemented by a plurality of ECUs. Alternatively, an onboard computer that integrates the functions of at least some of the ECUs **181** to **186** may be provided. The controller **180** may include ECUs other than the ECUs **181** to **186,** and any number of ECUs may be provided in accordance with functionality. Each ECU includes a processing circuit including one or more processors.

The communication device **190** is a device including a circuit communicating with the implement **300,** the terminal device **400** and the management device **600.** The communication device **190** includes circuitry to perform exchanges of signals complying with an ISOBUS standard such as ISOBUS-TIM, for example, between itself and the communication device **390** of the implement **300.** This allows the implement **300** to perform a desired operation, or allows information to be acquired from the implement **300.** The communication device **190** may further include an antenna and a communication circuit to exchange signals via the network **80** with communication devices of the terminal device **400** and the management device **600.** The network **80** may include a 3G, 4G, 5G, or any other cellular mobile communications network and the Internet, for example. The communication device **190** may have a function of communicating with a mobile terminal that is used by a supervisor who is situated near the agricultural machine 100. With such a mobile terminal, communication may be performed based on any arbitrary wireless communication standard, e.g., Wi-Fi (registered trademark), 3G, 4G, 5G or any other cellular mobile communication standard, or Bluetooth (registered trademark).

The operational terminal **200** is a terminal for the user to perform a manipulation related to the travel of the agricultural machine **100** and the operation of the implement 300, and is also referred to as a virtual terminal (VT). The operational terminal **200** may include a display device such as a touch screen panel, and/or one or more buttons. The display device may be a display such as a liquid crystal display or an organic light-emitting diode (OLED) display, for example. By manipulating the operational terminal **200,** the user can perform various manipulations, such as, for example, switching ON/OFF the self-driving mode, recording or editing an environment map, setting a target path, and switching ON/OFF the implement **300.** At least a portion of these manipulations may also be realized by manipulating the operation switches **210.** The operational terminal **200** may be configured so as to be detachable from the agricultural machine **100.** A user who is at a remote place from the agricultural machine **100** may manipulate the detached operational terminal **200** to control the operation of the agricultural machine **100.** Instead of the operational terminal **200,** the user may manipulate a computer on which necessary application software is installed, for example, the terminal device **400,** to control the operation of the agricultural machine **100.**

FIG. **5** is a diagram showing an example of the operational terminal **200** and an example of the operation switches **210** both provided in the cabin **105.** In the cabin **105,** the switches **210,** including a plurality of switches that are manipulable to the user, are disposed. The operation switches **210** may include, for example, a switch to select the gear shift as to a main gear shift or a range gear shift, a switch to switch between a self-driving mode and a manual driving mode, a switch to switch between forward travel and backward travel, a switch to raise or lower the implement **300,** and the like. In the case where the agricultural machine **100** only performs unmanned driving and lacks human driving functionality, the agricultural machine **100** does not need to include the operation switches **210.**

The drive device **340** in the implement **300** shown in FIG. **3** performs operations necessary for the implement **300** to perform predetermined work. The drive device **340** includes a device suitable for uses of the implement **300,** for example, a hydraulic device, an electric motor, a pump or the like. The controller **380** controls the operation of the drive device **340.** In response to a signal that is transmitted from the agricultural machine **100** via the communication device **390,** the controller **380** causes the drive device **340** to perform various operations. Moreover, a signal that is in accordance with the state of the implement **300** can be transmitted from the communication device **390** to the agricultural machine **100.**

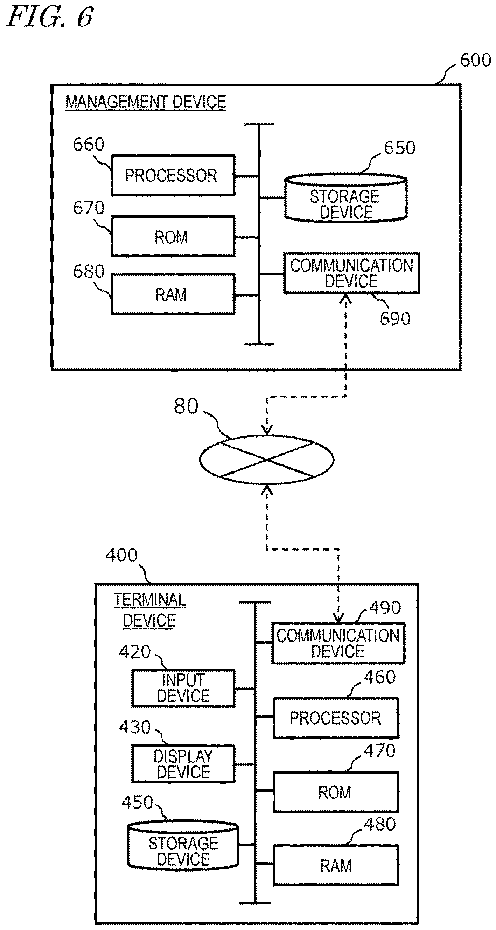

Now, a configuration of the management device **600** and the terminal device **400** will be described with reference to FIG. **6.** FIG. **6** is a block diagram showing an example of schematic hardware configuration of the management device **600** and the terminal device **400.**

The management device **600** includes a storage device **650,** a processor **660,** a ROM (Read Only Memory) **670,** a RAM (Random Access Memory) **680,** and a communication device **690.** These component elements are communicably connected to each other via a bus. The management device **600** may function as a cloud server to manage the schedule of the agricultural work to be performed by the agricultural machine **100** in a field and support agriculture by use of the data managed by the management device **600** itself. The user can input information necessary to create a work plan by use of the terminal device **400** and upload the input information to the management device **600** via the network **80.** The management device **600** can create a schedule of agricultural work, that is, a work plan based on the information. The management device **600** can further generate or edit an environment map and perform global path planning for the agricultural machine **100.** The environment map may be distributed from a computer external to the management device **600,** instead of being generated by the management device **600.**

The communication device **690** is a communication module to communicate with the agricultural machine **100** and the terminal device **400** via the network **80.** The communication device **690** can perform wired communication in compliance with communication standards such as, for example, IEEE1394 (registered trademark) or Ethernet (registered trademark). The communication device **690** may perform wireless communication in compliance with Bluetooth (registered trademark) or Wi-Fi, or cellular mobile communication based on 3G, 4G, 5G or any other cellular mobile communication standard.

The processor **660** may be, for example, a semiconductor integrated circuit including a central processing unit (CPU). The processor **660** may be realized by a microprocessor or a microcontroller. Alternatively, the processor **660** may be realized by an FPGA (Field Programmable Gate Array), a GPU (Graphics Processing Unit), an ASIC (Application Specific Integrated Circuit) or an ASSP (Application Specific Standard Product) each including a CPU, or a combination of two or more selected from these circuits. The processor **660** consecutively executes a computer program, describing commands to execute at least one process, stored in the ROM **670** and thus realizes a desired process.

The ROM **670** is, for example, a writable memory (e.g., PROM), a rewritable memory (e.g. , flash memory) or a memory which can only be read from but cannot be written to. The ROM **670** stores a program to control operations of the processor **660.** The ROM **670** does not need to be a single storage medium, and may be an assembly of a plurality of storage mediums. A portion of the assembly of the plurality of storage memories may be a detachable memory.

The RAM **680** provides a work area in which the control program stored in the ROM **670** is once developed at the time of boot. The RAM **680** does not need to be a single storage medium, and may be an assembly of a plurality of storage mediums.

The storage device **650** mainly functions as a storage for a database. The storage device **650** may be, for example, a magnetic storage device or a semiconductor storage device. An example of the magnetic storage device is a hard disc drive (HDD) . An example of the semiconductor storage device is a solid state drive (SSD) . The storage device **650** may be a device independent from the management device **600.** For example, the storage device **650** may be a storage device connected to the management device **600** via the network **80,** for example, a cloud storage.

The terminal device **400** includes an input device **420,** a display device **430,** a storage device **450,** a processor **460,** a ROM **470,** a RAM **480,** and a communication device **490.** These component elements are communicably connected to each other via a bus. The input device **420** is a device to convert an instruction from the user into data and input the data to a computer. The input device **420** may be, for example, a keyboard, a mouse or a touch panel. The display device **430** may be, for example, a liquid crystal display or an organic EL display. The processor **460,** the ROM **470,** the RAM **480,** the storage device **450** and the communication device **490** are substantially the same as the corresponding component elements described above regarding the example of the hardware configuration of the management device **600,** and will not be described in repetition.

### [2. Operation]

Now, an operation of the agricultural machine **100,** the terminal device **400** and the management device **600** will be described.

### [2-1. Self-traveling operation]

First, an example operation of self-traveling of the agricultural machine **100** will be described. The agricultural machine **100** according to the present embodiment can automatically travel both inside and outside a field. Inside the field, the agricultural machine **100** drives the implement **300** to perform predetermined agricultural work while traveling along a preset target path. When detecting an obstacle by the obstacle sensors **130** thereof while traveling inside the field, the agricultural machine **100** halts traveling and performs operations of presenting an alarm sound from the buzzer **220,** transmitting an alert signal to the terminal device **400** or the management device **600,** and the like. Inside the field, the positioning of the agricultural machine **100** is performed based mainly on data output from the GNSS unit **110.** Meanwhile, outside the field, the agricultural machine **100** automatically travels along a target path set for an agricultural road or a general road outside the field. While traveling outside the field, the agricultural machine **100** generates a local path based on data acquired by the cameras **120** or the LiDAR **140.** When an obstacle is detected outside the field, the agricultural machine **100** avoids the obstacle or halts at the point. Outside the field, the position of the agricultural machine **100** is estimated based on data output from the LiDAR sensor **140** or the cameras **120** in addition to positioning data output from the GNSS unit **110.**

Hereinafter, an operation of the agricultural machine **100** performing self-traveling inside the field will be described. An operation of the agricultural machine **100** performing self-traveling outside the field and a process of global path planning and local path planning outside the field will be described later.

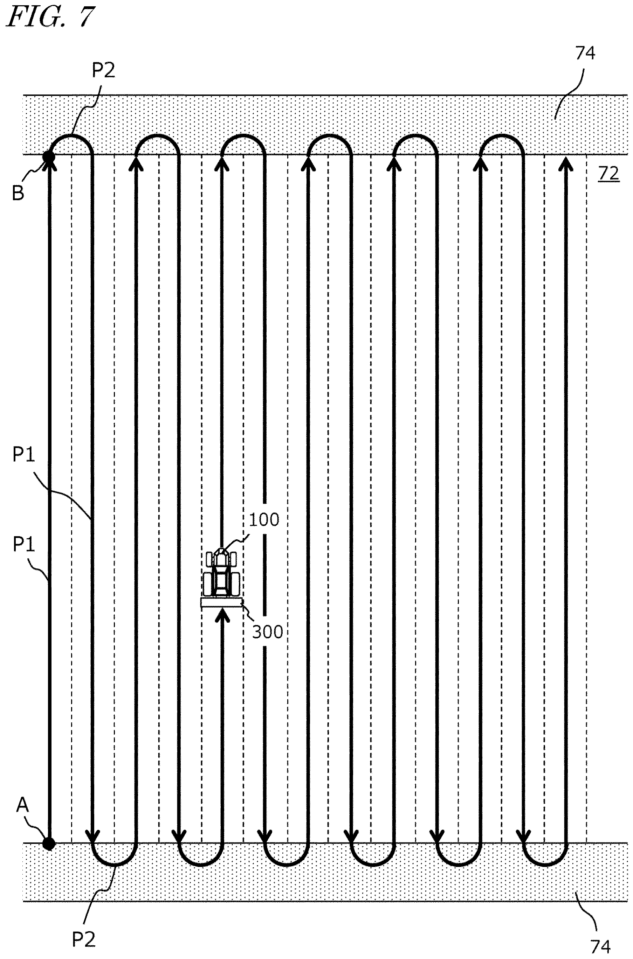

FIG. **7** is a diagram schematically showing an example of the agricultural machine **100** automatically traveling along a target path in a field. In this example, the field includes a work area **72,** in which the agricultural machine **100** performs work by using the implement **300,** and headlands **74,** which are located near outer edges of the field. The user may previously specify which regions of the field on the map would correspond to the work area **72** and the headlands **74.** The target path in this example includes a plurality of main paths **P1** parallel to each other and a plurality of turning paths **P2** interconnecting the plurality of main paths **P1.** The main paths **P1** are located in the work area **72,** whereas the turning paths **P2** are located in the headlands **74.** Although each of the main paths **P1** in FIG. **7** is illustrated as a linear path, each main path **P1** may also include a curved portion (s) . The main paths **P1** may be automatically generated by, for example, the user performing a manipulation of designating two points in the vicinity of ends of the field (points **A** and **B** in FIG. **7****)** while looking at the map of the field displayed on the display screen of the operational terminal **200** or the terminal device **400.** In this case, the management device **600** sets the plurality of main paths **P1** parallel to a line segment connecting the point **A** and the point **B** designated by the user and connects the main paths **P1** to each other with the turning paths **P2** to generate the target path inside the field. Broken lines in FIG. **7** depict the working breadth of the implement **300.** The working breadth may be set and recorded by the user manipulating the operational terminal **200** or the terminal device **400.** Alternatively, the working breadth may be automatically recognized and recorded when the implement **300** is connected to the agricultural machine **100.** The interval between the plurality of main paths **P1** may be set so as to be matched to the working breadth. As can be seen, the target path may be generated based on the manipulation made by the user, before self -driving is begun. The target path may be generated so as to cover the entire work area **72** in the field, for example. Along the target path shown in FIG. **7****,** the agricultural machine **100** automatically travels while repeating a reciprocating motion from a beginning point of work to an ending point of work. Note that the target path shown in FIG. **7** is merely an example, and the target path may be arbitrarily determined.

Now, an example control by the controller **180** during self-driving inside the field will be described.

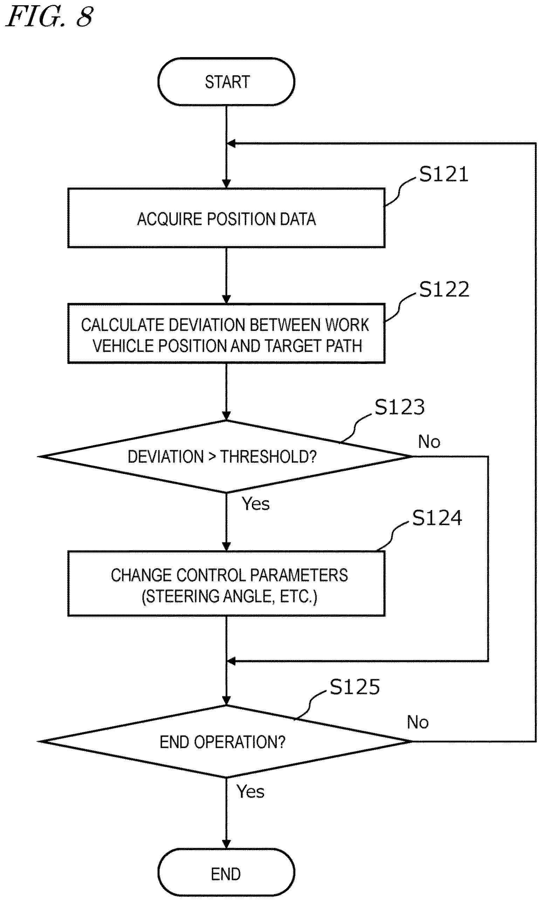

FIG. **8** is a flowchart showing an example operation of steering control to be performed by the controller **180** during self-driving. During travel of the agricultural machine **100,** the controller **180** performs automatic steering by performing the operation from steps **S121** to **S125** shown in FIG. **8****.** The speed of the agricultural machine **100** will be maintained at a previously-set speed, for example. First, during travel of the agricultural machine **100,** the controller **180** acquires data representing the position of the agricultural machine **100** that is generated by the GNSS unit **110** (step **S121).** Next, the controller **180** calculates a deviation between the position of the agricultural machine **100** and the target path (step **S122).** The deviation represents the distance between the position of the agricultural machine **100** and the target path at that moment. The controller **180** determines whether the calculated deviation in position exceeds the previously-set threshold or not (step **S123)** . If the deviation exceeds the threshold, the controller **180** changes a control parameter of the steering device included in the drive device **240** so as to reduce the deviation, thus changing the steering angle (step **S124)** . If the deviation does not exceed the threshold at step **S123,** the operation of step **S124** is omitted. At the following step **S125,** the controller **180** determines whether a command to end the operation has been received or not. The command to end the operation may be given when the user has instructed that self-driving be suspended through remote operations, or when the agricultural machine **100** has arrived at the destination, for example. If the command to end the operation has not been given, the control returns to step **S121** and the controller **180** performs substantially the same operation based on a newly measured position of the agricultural machine **100.** The controller **180** repeats the operation from steps **S121** to **S125** until a command to end the operation is given. The aforementioned operation is executed by the ECUs **182** and **184** in the controller **180.**

In the example shown in FIG. **8****,** the controller **180** controls the drive device **240** based only on the deviation between the position of the agricultural machine **100** as identified by the GNSS unit **110** and the target path. Alternatively, a deviation in terms of directions may further be considered in the control. For example, when a directional deviation exceeds a previously-set threshold, where the directional deviation is an angle difference between the orientation of the agricultural machine **100** as identified by the GNSS unit **110** and the direction of the target path, the controller **180** may change the control parameter of the steering device of the drive device **240** (e.g., steering angle) in accordance with the deviation.

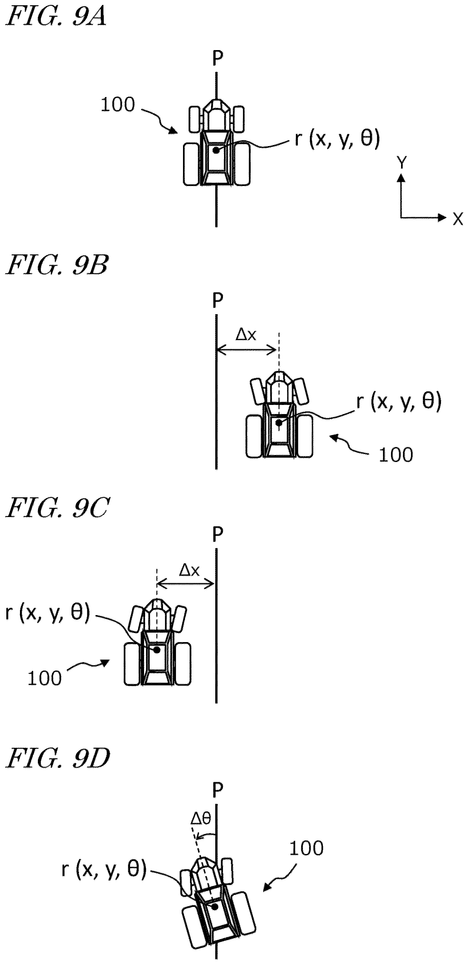

Hereinafter, with reference to FIGS. **9A** to **9D****,** an example of steering control by the controller **180** will be described more specifically.

FIG. **9A** is a diagram showing an example of the agricultural machine **100** traveling along a target path **P.** FIG. **9B** is a diagram showing an example of the agricultural machine **100** at a position which is shifted rightward from the target path **P.** FIG. **9C** is a diagram showing an example of the agricultural machine **100** at a position which is shifted leftward from the target path **P.** FIG. **9D** is a diagram showing an example of the agricultural machine **100** oriented in an inclined direction with respect to the target path **P.** In these figures, the pose, i.e., the position and orientation, of the agricultural machine **100** as measured by the GNSS unit **110** is expressed as r(x,y,θ). Herein, (x,y) are coordinates representing the position of a reference point on the agricultural machine **100** in an XY coordinate system, which is a two-dimensional coordinate system fixed to the globe. In the examples shown in FIGS. **9A** to **9D****,** the reference point on the agricultural machine **100** is at a position, on the cabin, where a GNSS antenna is disposed, but the reference point may be at any arbitrary position. θ is an angle representing the measured orientation of the agricultural machine **100.** Although the target path P is shown parallel to the Y axis in the examples illustrated in these figures, the target path P may not necessarily be parallel to the Y axis, in general.

As shown in FIG. **9A****,** in the case where the position and orientation of the agricultural machine **100** are not deviated from the target path **P,** the controller **180** maintains the steering angle and speed of the agricultural machine **100** without changing them.

As shown in FIG. **9B****,** when the position of the agricultural machine **100** is shifted rightward from the target path **P,** the controller **180** changes the steering angle so that the traveling direction of the agricultural machine **100** will be inclined leftward, thus bringing the agricultural machine **100** closer to the path **P.** At this point, not only the steering angle but also the speed may be changed. The magnitude of the steering angle may be adjusted in accordance with the magnitude of a positional deviation Δx, for example.

As shown in FIG. **9C****,** when the position of the agricultural machine **100** is shifted leftward from the target path **P,** the controller **180** changes the steering angle so that the traveling direction of the agricultural machine **100** will be inclined rightward, thus bringing the agricultural machine **100** closer to the path **P.** In this case, too, not only the steering angle but also the speed may be changed. The amount of change of the steering angle may be adjusted in accordance with the magnitude of the positional deviation Δx, for example.

As shown in FIG. **9D****,** in the case where the position of the agricultural machine **100** is not considerably deviated from the target path **P** but its orientation is nonetheless different from the direction of the target path **P,** the controller **180** changes the steering angle so that the directional deviation Δθ will become smaller. In this case, too, not only the steering angle but also the speed may be changed. The magnitude of the steering angle may be adjusted in accordance with the magnitudes of the positional deviation Δx and the directional deviation Δθ, for example. For instance, the amount of change of the steering angle (which is in accordance with the directional deviation Δθ) may be increased as the absolute value of the positional deviation Δx decreases. When the positional deviation Δx has a large absolute value, the steering angle will be changed greatly in order for the agricultural machine **100** to return to the path **P,** so that the directional deviation Δθ will inevitably have a large absolute value. Conversely, when the positional deviation Δx has a small absolute value, the directional deviation Δθ needs to become closer to zero. Therefore, it may be advantageous to introduce a relatively large weight (i.e., control gain) for the directional deviation Δθ in determining the steering angle.

For the steering control and speed control of the agricultural machine **100,** control techniques such as PID control or MPC (Model Predictive Control) may be applied. Applying these control techniques will make for smoothness of the control of bringing the agricultural machine **100** closer to the target path **P.**

Note that, when an obstacle is detected by one or more obstacle sensors **130** during travel, the controller **180** halts the agricultural machine **100.** At this point, the controller **180** may cause the buzzer **220** to present an alarm sound or may transmit an alert signal to the terminal device **400** or the management device **600.** In the case where the obstacle is avoidable, the controller **180** may control the drive device **240** such that the obstacle is avoided.

The agricultural machine **100** according to the present embodiment can perform self-traveling outside a field as well as inside the field. Outside the field, the controller **180** is able to detect an object located at a relatively distant position from the agricultural machine **100** (e.g. , another vehicle, a pedestrian, etc.) based on data output from the cameras **120** or the LiDAR sensor **140.** The controller **180** generates a local path such that the local path avoids the detected object, and performs speed control and steering control along the local path. In this manner, self-traveling on a road outside the field can be realized.

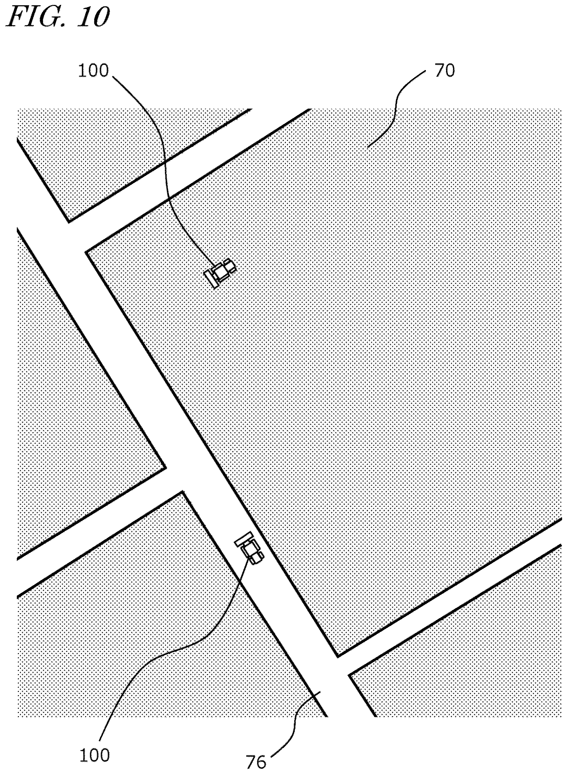

As described above, the agricultural machine **100** according to the present embodiment can automatically travel inside the field and outside the field in an unmanned manner. FIG. **10** is a diagram schematically showing an example of state where a plurality of the agricultural machines **100** are performing self - traveling inside a field **70** and on a road **76** outside the field **70.** In the storage device **170,** an environment map of a region including a plurality of fields and roads around the fields, and a target path, are recorded. The environment map and the target path may be generated by the management device **600** or the ECU **185**. In the case of traveling on a road, the agricultural machine **100** travels along the target path while sensing the surroundings thereof by use of the sensing devices such as the cameras **120** and the LiDAR sensor **140,** with the implement **300** being raised. During travel, the controller **180** consecutively generates a local path and causes the agricultural machine **100** to travel along the local path. This allows the agricultural machine **100** to perform self-traveling while avoiding obstacles. During travel, the target path may be changed in accordance with the state.

### [2-2. Creation of a work plan]

The agricultural machine **100** according to the present embodiment automatically moves between the fields and performs agricultural work in each of the fields in accordance with a work plan created by the management device **600.** The work plan includes information on one or more tasks of agricultural work to be performed by the agricultural machine **100.** For example, the work plan includes information on one or more tasks of agricultural work to be performed by the agricultural machine **100** and on the field where each task is to be performed. The work plan may include information on a plurality of tasks of agricultural work to be performed by the agricultural machine **100** over a plurality of working days and on the field where each task of agricultural work is to be performed. More specifically, the work plan may be a database including information on a work schedule indicating which agricultural machine is to perform which task of agricultural work in which field at which point of time for each working day. Hereinafter, an example case where the work plan is data of such a work schedule will be described. The work plan may be created by the processor **660** of the management device **600** based on information input by the user to the terminal device **400.** Hereinafter, an example of method for creating the work schedule will be described.

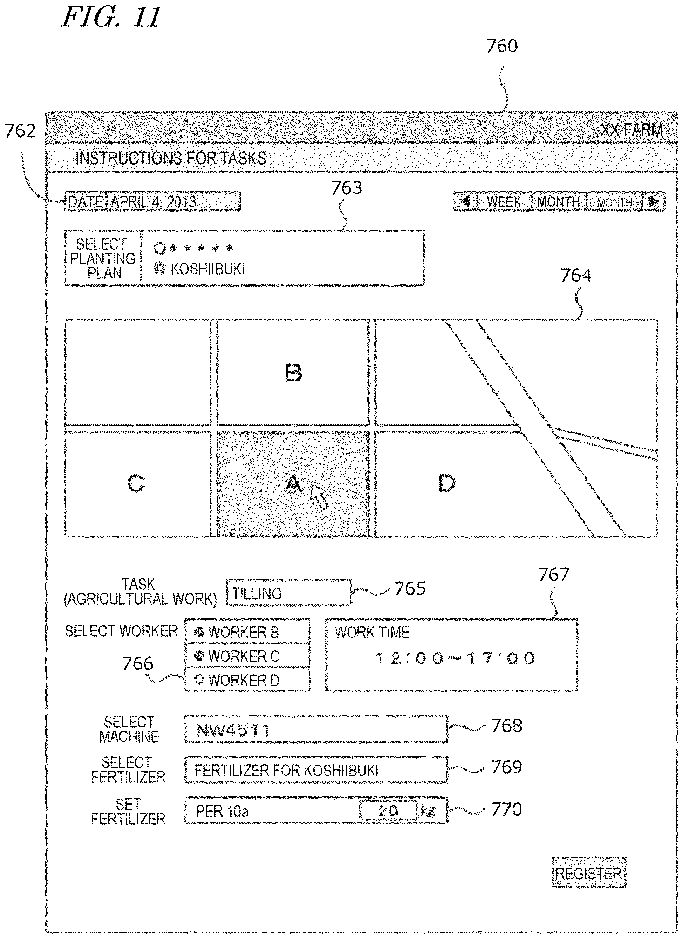

FIG. **11** is a diagram showing an example of setting screen **760** displayed on the display device **430** of the terminal device **400.** In response to a manipulation performed by the user by use of the input device **420,** the processor **460** of the terminal device **400** activates application software for schedule creation to cause the display device **430** to display the setting screen **760** as shown in FIG. **11****.** The user can input information necessary to create a work schedule on the setting screen **760.**

FIG. **11** shows an example of the setting screen **760** in the case where tilling accompanied by spraying of a fertilizer is to be performed as the agricultural work in a field for rice farming. The setting screen **760** is not limited to the one shown in the figure, and may be changed when necessary. The setting screen **760** in the example of FIG. **11** includes a date setter **762,** a planting plan selector **763,** a field selector **764,** a work selector **765,** a worker selector **766,** a time setter **767,** a machine selector **768,** a fertilizer selector **769,** and a spray amount setter **770.**

The date setter **762** displays a date input by the input device **420.** The input date is set as the day when the agricultural work is to be performed.

The planting plan selector **763** displays a list of names of planting plans created previously. The user can select a desired planting plan from the list. The planting plan is created previously for each of types or each of breeds of crops, and is recorded in the storage device **650** of the management device **600.** The planting plan is a plan regarding which crop is to be planted (seeded) in which field. The planting plan is created by, for example, a manager managing a plurality of fields before the crop is planted in one of the fields. In the example of FIG. **11****,** a planting plan for rice breed "KOSHIIBUKI" is selected. In this case, the contents set by the setting screen **760** are associated with the planting plan of "KOSHIIBUKI".

The field selector **764** displays the fields in the map. The user can select any field from the fields displayed. In the example of FIG. **11****,** an area indicating "field A" is selected. In this case, the selected "field A" is set as the field where the agricultural work is to be performed.

The work selector **765** displays a plurality of types of agricultural work necessary to grow the selected crop. The user can select one type of agricultural work from the plurality of types of agricultural work. In the example of FIG. **11****,** "tilling" is selected from the plurality of types of agricultural work. In this case, the selected "tilling" is set as the agricultural work to be performed.

The worker selector **766** displays workers registered previously. The user can select one or more workers from the plurality of workers displayed. In the example of FIG. **11****,** "worker B" and "worker C" are selected from the plurality of workers. In this case the "worker B" and the "worker C" selected are set as the workers in charge of performing or managing the agricultural work. In the present embodiment, the agricultural machine performs agricultural work automatically. Therefore, the workers do not need to actually perform the agricultural work, and may merely remotely monitor the agricultural work performed by the agricultural machine.

The time setter **767** displays a work time period input by the input device **420.** The work time period is specified by a point of time to begin the agricultural work and a point of time to end the agricultural work. The input work time period is set as the time period in which the agricultural work is scheduled to be performed.

The machine selector **768** is used to set the agricultural machine to be used for the agricultural work. The machine selector **768** may display, for example, the types or models of the agricultural machines previously registered by the management device **600** and the types, models, etc. of usable implements. The user can select a specific machine from the machines displayed. In the example of FIG. **11****,** the implement of model "NW4511" is selected. In this case, this implement is set as the machine to be used for the agricultural work.

The fertilizer selector **769** displays names of a plurality of fertilizers registered by the management device **600** previously. The user can select a specific fertilizer from the plurality of fertilizers displayed. The selected fertilizer is set as the fertilizer to be used for the agricultural work.

The spray amount setter **770** displays a numerical value input by the input device **420.** The input numerical value is set as the spray amount.

When the planting plan, the field, the agricultural work, the worker, the work time period, the fertilizer and the spray amount are input to the setting screen **760** and "register" is selected, the communication device **490** of the terminal device 400 transmits the input information to the management device **600.** The processor **660** of the management device **600** causes the storage device **650** to store the received information. Based on the received information, the processor **660** creates a schedule of the agricultural work to be performed by each agricultural machine and causes the storage device **650** to store the schedule.

Note that the information on the agricultural work to be managed by the managing device **600** is not limited to the above-described information. For example, the type and the spray amount of the agricultural chemical to be used in the field may be set by the setting screen **760.** Information on agricultural work other than the types of agricultural work shown in FIG. **11** may be set by the setting screen **760.**

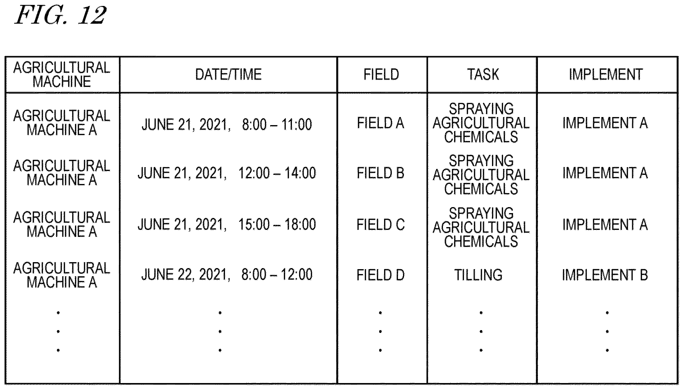

FIG. **12** is a table showing an example of schedule of agricultural work created by the management device **600.** The schedule in this example includes information representing the date and time of the agricultural work, the field for the agricultural work, the contents of the work, and the implement to be used, for each of the registered agricultural machines. The schedule may include, in addition to the information shown in FIG. **12****,** other information in accordance with the contents of work, for example, information on the types of agricultural chemicals or the spray amounts of the agricultural chemicals, . The processor **660** of the management device **600** instructs the agricultural machine **100** to perform the agricultural work in accordance with such a schedule. The schedule may be downloaded by the controller **180** of the agricultural machine **100** and may also stored in the storage device **170.** In this case, the controller **180** may spontaneously begin the operation in accordance with the schedule stored in the storage device **170.**

In the present embodiment, the work plan is created by the management device **600.** The work plan may be created by another device. For example, the processor **460** of the terminal device **400** or the controller **180** of the agricultural machine **100** may have a function of creating or updating the work plan.

### [2-3. Path planning]

Now, an operation of path planning according to the present embodiment will be described in more detail.

The management device **600** according to the present embodiment functions as a path planning system for the agricultural machine **100.** The storage device **650** stores a map including a plurality of fields, a plurality of waiting areas, and a road connecting the plurality of fields and the plurality of waiting areas to each other. The processor **660** of the management device **600** functions as a processing unit that generates a path for the agricultural machine **100** (the global path described above) on the map. The management device **600** generates a path for the agricultural machine **100** for each of working days, based on a work plan. The management device **600,** for example, generates a path between fields and a path connecting a field and a waiting area for each working day, in accordance with the schedule of the agricultural work indicated by the work plan for each working day.

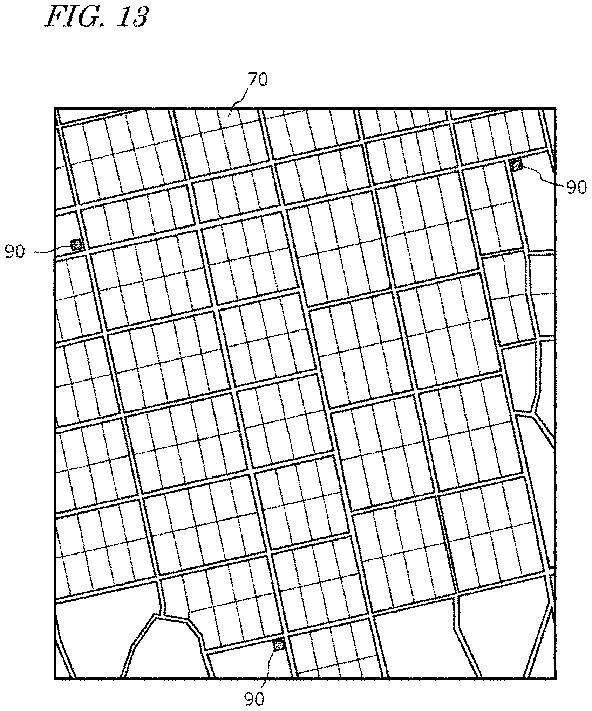

FIG. **13** is a diagram showing an example of map that is referred to at the time of path planning. This map is a two-dimensional digital map, and may be created or updated by the management device **600** or another device. The map shown in FIG. **13** includes information on the position of each of points (e.g. , the latitude and the longitude of each of the points) in a plurality of fields **70** where the agricultural machine **100** is to perform agricultural work and roads **76** around the fields **70.** This map further includes positional information on a plurality of waiting areas **90,** where the agricultural machine **100** may wait temporarily. The waiting areas **90** are previously registered by a manager of the agriculture management system and recorded in the storage device **650.** The map as shown in FIG. **13** may be created for the entirety of a district where the agricultural machine **100** may travel. Note that the map shown in FIG. **13** is a two-dimensional map, but a three-dimensional map may be used for the path planning.

The waiting areas **90** may each be, for example, a site that is used jointly by a plurality of agricultural machines . The waiting areas **90** may each be, for example, a facility such as a parking area or a garage managed or run by a business operator running the agriculture management system, an agricultural cooperative or a regional government of a city, a town or a village. In the case where the waiting area **90** is a facility locked at nighttime, the agricultural machine waiting in the waiting area **90** can be prevented from being robbed. A portion of either one of the fields may be used as the waiting area **90.** FIG. **13** shows three waiting areas **90** as an example, but two, or four or more, waiting areas **90** may be provided.

Before the agricultural work begins on each of the working days, the management device **600** reads, from the storage device **650,** a map of a region including the field(s) where the agricultural work is to be scheduled on that particular working day, and generates a path (global path) for the agricultural machine **100** based on the map.

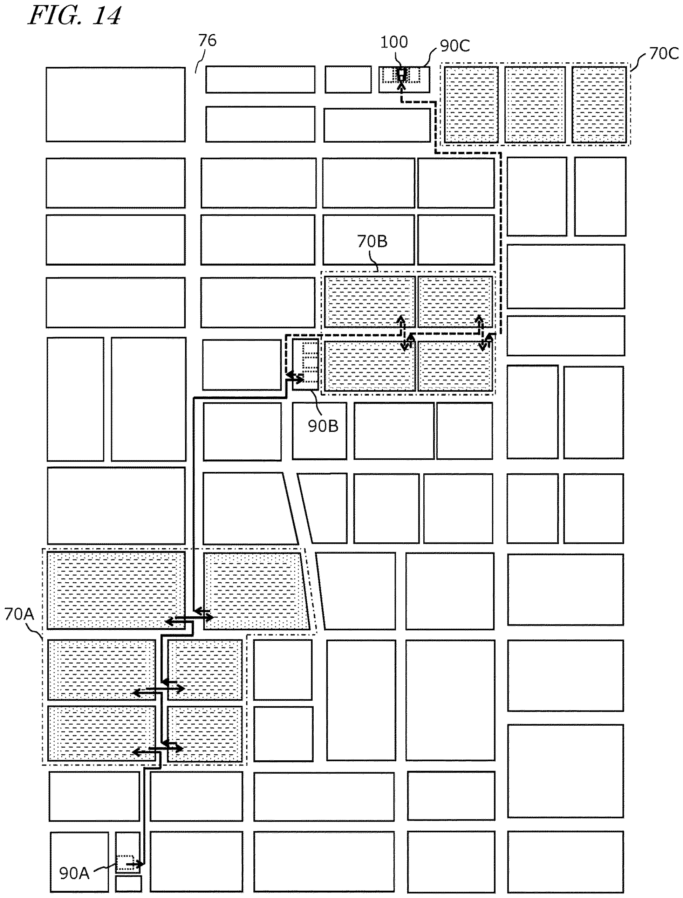

FIG. **14** is a diagram showing an example of global path to be generated. FIG. **14** shows, as an example, a field group **70A,** where the agricultural work is to be performed on one working day, a field group **70B,** where the agricultural work is to be performed on the next working day, and a field group **70C,** where the agricultural work is to be performed on the working day after the next working day. FIG. **14** also shows, as an example, three waiting areas **90A, 90B** and **90C,** where the agricultural machine **100** may wait. In FIG. **14****,** the field group **70A** and the waiting area **90A,** the field group **70B** and the waiting area **90B,** and the field group **70C** and the waiting area **90C,** are shown as being relatively close to each other for the sake of convenience. In actuality, the distances between the field group **70A** and the waiting area **90A,** the field group **70B** and the waiting area **90B,** and the field group **70C** and the waiting area **90C,** may be long, for example, 500 m to 10 km or even longer.

In FIG. **14****,** paths, among the paths generated by the management device **600,** which are generated on the roads **76** are represented by arrows. Paths generated inside the fields are not shown. The paths inside the fields are generated separately from the paths outside the fields as described above with reference to FIG. **7****.** The management device **600** connects the paths outside the fields and the paths inside the fields to each other and thus generates an overall global path. In FIG. **14****,** solid line arrows represent an example of paths for the agricultural machine **100** on one working day. Broken line arrows represent an example of paths for the agricultural machine **100** on the next working day.

In the example shown in FIG. **14****,** the management device **600** generates, as a path for one working day, a path along which the agricultural machine **100** departs from the waiting area **90,** sequentially passes the fields in the field group **70A** and reaches the waiting area **90B.** This is because the waiting area **90B** is the waiting area closest to the field group **70B,** where the agricultural work is scheduled to be performed on the next working day. The management device **600** generates, as a path for the next working day, a path along which the agricultural machine **100** departs from the waiting area **90B,** sequentially passes the fields in the field group **70B** and reaches the waiting area **90C.** This is because the waiting area **90C** is the waiting area closest to the field group **70C,** where the agricultural work is scheduled to be performed on the working day after the next working day. In this manner, the management device **600** generates a path from the field where a final task of agricultural work is to be performed on each working day, to the waiting area located at the shortest average distance from the group of fields where the agricultural work is to be performed on the next working day. The agricultural machine **100** travels along the generated path.

In the example shown in FIG. **14****,** on one working day, the agricultural machine **100** departs from the waiting area **90A,** sequentially visits the fields in the field group **70A,** where the agricultural work is scheduled to be performed on the day, and performs the agricultural work indicated by the schedule in each field. In each field, the agricultural machine **100** performs the agricultural work while performing self-traveling along the tasked travel path by, for example, the method described above with reference to FIG. **7** to FIG. **9D****.** When finishing the agricultural work in one field, the agricultural machine **100** enters the next field, and performs the agricultural work in substantially the same manner. The agricultural machine **100** operates in this manner, and when finishing the agricultural work in the field assigned to the final task of agricultural work for the day, the agricultural machine **100** moves to the waiting area **90A.** The agricultural machine **100** waits at the waiting area **90A** until the next working day. On the next working day, the agricultural machine **100** departs from the waiting area **90A,** sequentially visits the fields in the field group **70B,** where the agricultural work is scheduled to be performed on the day, and performs the agricultural work indicated by the schedule in each field. When finishing the agricultural work in the field assigned to the final task of agricultural work for the day, the agricultural machine **100** moves to the waiting area **90B.** The agricultural machine **100** waits at the waiting area **90B** until the working day after the next working day. On the working day after the next working day, the agricultural machine **100** departs from the waiting area **90B,** sequentially performs the agricultural work in the fields in the field group **70C,** and then moves to a predetermined waiting area in substantially the same manner. With such an operation, the agricultural machine **100** is moved efficiently along an optimal path in accordance with the schedule, so that the scheduled agricultural work can be completed. As in this example, a plurality of waiting areas are provided, so that the time and the amount of consumption of the fuel required to move the agricultural machine **100** can be decreased as compared with in the case where the agricultural machine **100** returns to the same site (e.g., the repository) each day. As a result, a series of tasks of agricultural work over a plurality of working days can be performed more efficiently.

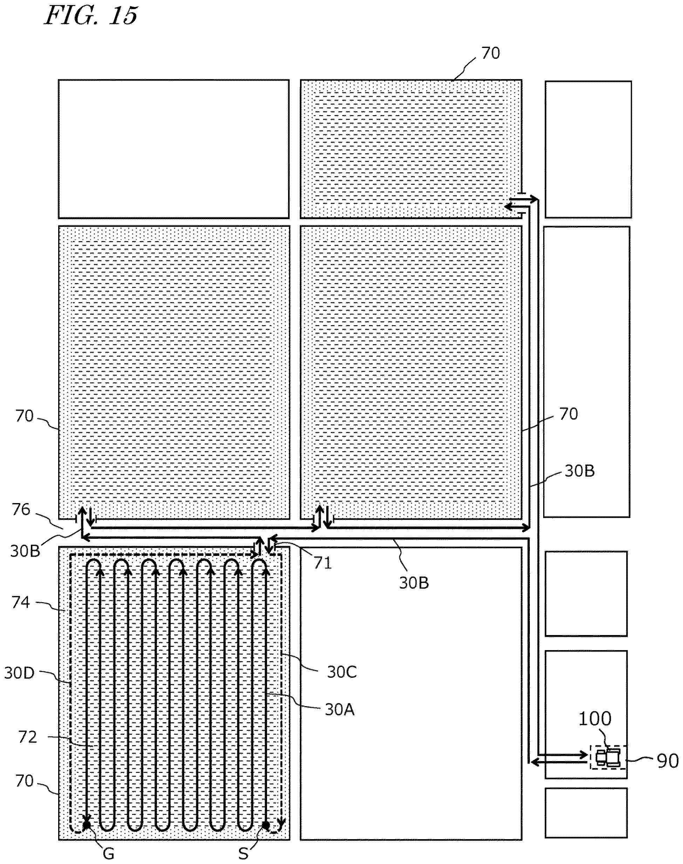

Now, with reference to FIG. **15****,** an example of method for generating a global path will be described in more detail. FIG. **15** is a diagram showing an example of global path to be generated on one working day. In this example, the management device **600** generates a path along which the agricultural machine **100** departs from the waiting area **90,** passes four fields **70,** and returns to the waiting area **90.** The management device **600** generates a first path **30A** inside each of the fields **70,** and generates second paths **30B** on the roads **76** around the fields **70.** In FIG. **15****,** the first path **30A** is shown only inside the left bottom field **70,** and the first paths inside the other fields **70** are omitted.

The management device **600** generates the first path **30A** as represented by the solid line arrows in FIG. **15****,** inside each of the fields **70** on the map. The management device **600** generates the first path **30A** based on the settings previously made by the user as described above with reference to FIG. **7****.** The first path **30A** may be generated so as to cover the entirety of the work area **72** by repeating a reciprocating motion from a beginning point **S** to an ending point **G.** The interval between rows of the first path **30A** may be determined in consideration of the width and the turning performance of each of the agricultural machine **100** and the implement **300.** The management device **600** generates the first path **30A** inside the field **70** based on the information on the registered field **70.** For example, the management device **600** generates the first path **30A** based on the information on the external shape and the area size of the registered field **70,** the ranges of the work area **73** and the headland **74** set by the user, and the like. The first path **30A** may be generated for each of the fields **70,** for example, before the agricultural machine **100** begins to perform self-driving.

The management device **600** further generates a path from the waiting area **96** to each of the fields **70** and paths connecting such a plurality of fields **70** as second paths **30B.** In the example shown in FIG. **15****,** the management device **600** generates a second path **30B** at an entrance of each field **70** in addition to the second paths **30B** on the roads **76,** and generates a third path **30C** connecting the second path **30B** generated at each entrance and the beginning point **S** of the corresponding first path **30A** to each other. The management device **600** further generates a second path **30B** at an exit of each field **70** in addition to the second paths **30B** on the roads **76,** and generates a fourth path **30D** connecting the second path **30B** generated at each exit and the ending point **G** of the corresponding first path **30A** to each other. In the example shown in FIG. **15****,** the entrance and the exit of each field **70** are common to each other, and will be expressed as an "entrance/exit **71",** hereinafter. Each field **70** may have a plurality of entrances/exits **71,** or the entrance and the exit may be provided at different positions. The environment map includes positional information on the entrance/exit **71** (or the entrance and the exit) of each field **70** in addition to the positional information on each field **70.** The management device **600** can generate the second paths **30B** based on the positional information. The management device **600** generates the third path **30C** and the fourth path **30D** in a region, of the field **70,** that is other than a region where the agricultural work has already been performed. This can prevent the work area **72,** where the agricultural work has already been performed, from being trampled by the work vehicle **100.**

The management device **600** can perform the above-described path generation process for each of the fields **70** and each of the roads **76** around the fields **70** to generate all the paths for a predetermined time period (e.g., half a day, one day, three days, etc.). For example, before the agricultural machine **100** begins traveling on each working day, the management device **600** may generate all the paths necessary to complete all the tasks of agricultural work scheduled for that particular working day. Alternatively, the management device **600** may first generate a path necessary to perform a portion of the agricultural work scheduled for each working day, and then, after the portion of the agricultural work ends, may generate a path necessary to perform the remaining portion of the agricultural work for that particular working day. Still alternatively, the management device **600** may generate, all at once, all the paths necessary to complete all the tasks of agricultural work scheduled over a plurality of working days. The management device **600** may change the path, once generated, in accordance with various states such as the state of progress of agricultural work, the state of weather, the traffic state and the state of the agricultural road.

The management device **600** generates the second path 30B along the road **76** in accordance with a predetermined algorithm. The management device **600** can generate the second path **30B** in accordance with a path generation algorithm based on a search algorithm such as, for example, the Dijkstra's algorithm or the A* search algorithm. The management device **600** may automatically generate the second path **30B** at a predetermined timing based on the work plan or may generate the second path **30B** in accordance with the user's instructions. The management device **600** may determine the second path **30B** in accordance with the state of the road **76** (e.g., agricultural road) leading to the field **70.** In the case where, for example, trees grow thick along the road leading to the field **70** and may possibly prevent receipt of radio waves from a GNSS satellite, the management device **600** may exclude such a road to generate the second path **30B.**

As a result of the above-described operation, the management device **600** can generate a global path from the departure point of the agricultural machine **100** to the target point via one or more fields **70.** The management device **600** may generate a path for the agricultural machine **100** for, for example, every predetermined time period (every day, every half day, every three hours, etc.) . The management device **600** generates a global path for the agricultural machine **100** such that the agricultural machine **100** performs the agricultural work in the specified field **70** at the specified point of time in accordance with the schedule previously created. Information on the generated global path is transmitted to the agricultural machine **100** and stored in the storage device **170.** The ECU **184,** performing self - driving control, controls the ECUs **181** and **182** such that the agricultural machine **100** travels along the global path. This allows the agricultural machine **100** to begin traveling along the global path.

There may be a case where while the agricultural machine **100** is traveling outside the field, there is an obstacle such as a pedestrian or another vehicle on the global path or in the vicinity thereof. In order to avoid the agricultural machine **100** colliding against the obstacle, while the agricultural machine **100** is traveling, the ECU **185** of the controller **180** consecutively generates a local path along which the agricultural machine **100** can avoid the obstacle. While the agricultural machine **100** is traveling, the ECU **185** generates a local path based on sensing data acquired by the sensing device included in the agricultural machine **100** (the obstacle sensors **130,** the LiDAR sensor **140,** the cameras **120,** etc.). The local path is defined by a plurality of waypoints along a portion of the global path. Based on the sensing data, the ECU **185** determines whether or not there is an obstacle existing on the road on which the agricultural machine **100** is proceeding or in the vicinity thereof. In the case where there is such an obstacle, the ECU **185** sets a plurality of waypoints such that the obstacle is avoided, and thus generates a local path. In the case where there is no such obstacle, the ECU **185** generates a local path substantially parallel to the global path. Information representing the generated local path is transmitted to the ECU **184** responsible for self - driving control. The ECU **184** controls the ECU **181** and the ECU **182** such that the agricultural machine **100** travels along the local path. This allows the agricultural machine **100** to travel while avoiding the obstacle. In the case where there is a traffic signal on the road on which the agricultural machine **100** is traveling, the agricultural machine **100** may recognize the traffic signal based on, for example, an image captured by the cameras **120** and perform an operation of halting at a red light and moving forward at a green light.

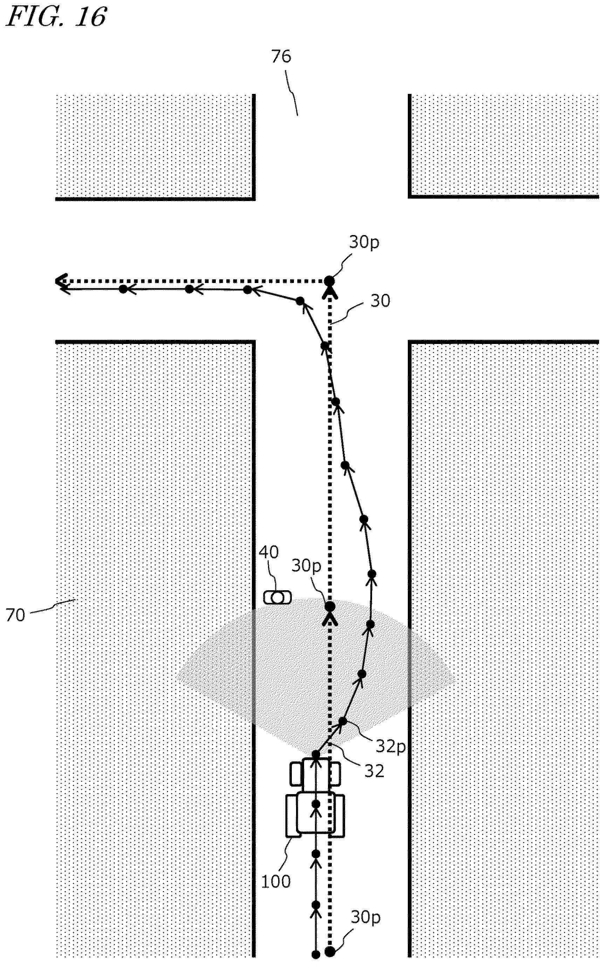

FIG. **16** is a diagram showing an example of global path and an example of local path generated in an environment where there is an obstacle. FIG. **16** represents, as an example, a global path **30** by the broken line arrows, and represents, as an example, local paths **32** consecutively generated during travel of the agricultural machine **100** by the solid line arrows. The global path **30** is defined by a plurality of waypoints **30p.** The local paths **32** are defined by a plurality of waypoints **32p** set at a shorter interval than the waypoints **30p.** The waypoints each have information on, for example, the position and the orientation. The management device **600** sets the plurality of waypoints **30p** at a plurality of points including an intersection of the roads **76** to generate the global path **30.** The interval between the waypoints **30p** is relatively long, and may be, for example, about several meters to about several tens of meters. The ECU **185** sets the plurality of waypoints **32p** based on the sensing data output from the sensing device during travel of the agricultural machine **100** to generate the local paths **32.** The interval between the waypoints **32p** of the local paths **32** is shorter than the interval between the waypoints **30p** of the global path **30.** The interval between the waypoints **32p** may be, for example, about several tens of centimeters (cm) to about several meters (m) . The local paths **32** are generated in a relatively small range (e.g., a range of about several meters) from the position of the agricultural machine **100.** FIG. **16** shows, as an example, a series of local paths **32** generated while the agricultural machine **100** travels along the road **76** between the fields **70** and turns left at the intersection. While the agricultural machine **100** is moving, the ECU **185** repeats an operation of generating a local path from the position of the agricultural machine **100** estimated by the ECU **184** to, for example, a point frontward of the agricultural machine **100** by several meters. The agricultural machine **100** travels along the local paths consecutively generated.

In the example shown in FIG. **16****,** there is an obstacle **40** (e.g., a human) frontward of the agricultural machine **100.** FIG. **16** shows a fan-shaped region as an example of range sensed by the sensing devices such as the cameras **120,** the obstacle sensors **130** or the LiDAR sensor **140** mounted on the agricultural machine **100.** In such a state, the ECU **185** generates the local paths **32** such that the obstacle **40** detected based on the sensing data is avoided. The ECU **185** determines whether or not there is a possibility that the agricultural machine **100** will collide against the obstacle **40,** based on, for example, the sensing data and the width of the agricultural machine **100** (including the width of the implement in the case where the implement is attached). In the case where there is a possibility that the agricultural machine **100** will collide against the obstacle **40,** the ECU **185** sets the plurality of waypoints **32p** such that the obstacle **40** is avoided, and generates the local paths **32.** Note that the ECU **185** may recognize the state of the road surface (e.g. , being muddy, having a cave-in, etc.) based on the sensing data, in addition to the presence/absence of the obstacle **40,** and in the case where a site on which it is difficult to walk is detected, may generate the local paths **32** such that the local path **32** avoids such a site. The agricultural machine **100** travels along the local paths **32.** In the case where the obstacle **40** cannot be avoided in whichever manner the local paths **32** may be set, the controller **180** may halt the agricultural machine **100.** At this point, the controller **180** may transmit an alert signal to the terminal device **400** or the management device **600** to warn a supervisor. In the case where after the agricultural machine **100** halts, the obstacle **40** is moved and it is recognized that there is no risk of collision, the controller **180** may restart the travel of the agricultural machine **100.**

### [2-4. Determination on the waiting area in accordance with the state]

Now, a more detailed example of method for determining the waiting area for the agricultural machine will be described. In the example described below, a plurality of agricultural machines including the agricultural machine **100** perform self-driving in a relatively large district and perform agricultural work in a plurality of fields in the district. The agricultural machines may perform self -driving in, for example, a large region including a plurality of districts having different meteorological conditions. Such agricultural machines may be used for a service performing agricultural work instead of the user in a plurality of fields in each of the districts.

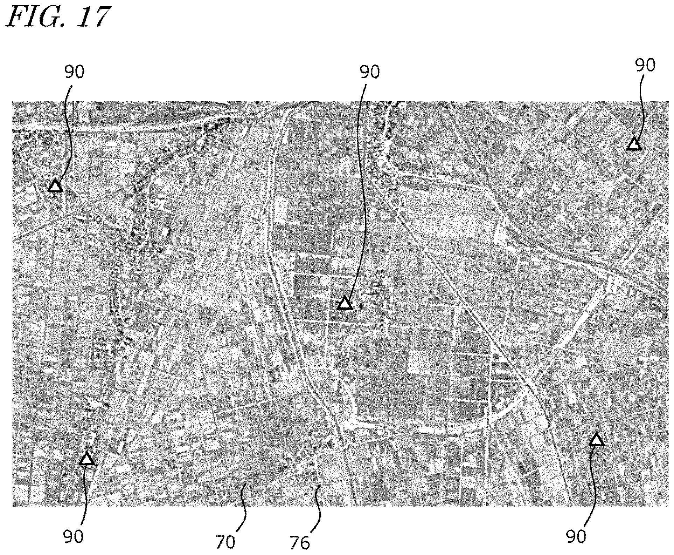

FIG. **17** shows an example of map of a district where the agricultural machines perform agricultural work. Note that the map shown in FIG. **16** is a map for explanation that is created as a result of processing performed on an aerial photograph created by the Geospatial Information Authority of Japan. The map actually used is not necessarily based on an aerial photograph created by the Geospatial Information Authority of Japan, and a map of any data format may be used. The map is created for the entirety of the district where the agricultural machines move and recorded in the storage device **650.**

The map shown in FIG. **17** includes information on the position of each of points (e.g., the latitude and the longitude of each of the points) in a plurality of fields **70,** a plurality of waiting areas **90** and roads **76** around the fields **70** and the waiting areas **90.** The map shown in FIG. **17** represents the positions of the waiting areas **90** with triangular marks "Δ". The waiting areas **90** may each be, for example, a facility such as a warehouse, a garage or a parking area managed by the business operator that runs the agriculture management system. A portion of either one of the fields may be used as a waiting area **90.**

The agricultural machines each perform self-driving under the supervision of the management device **600** and perform agricultural work assigned thereto. The map is previously created so as to cover the entirety of the district where all the agricultural machines that are run under the supervision of the management device **600** move. The agricultural machines may each be, for example, a tractor like the agricultural machine **100** described above or another type of movable body for agriculture such as a rice transplanter, a combine, a vegetable harvester or an agricultural drone.

FIG. **17** shows five waiting areas **90** as an example. The waiting areas **90** may be set at an interval of, for example, about several hundred meters to about several kilometers. The number and the distribution of the waiting areas **90** are determined in accordance with various conditions such as the number of the agricultural machines that are run, the distribution of the fields **70,** the size of the district where the agricultural machines are run, and the road traffic environment. The waiting areas **90** may be registered by, for example, the manager of the agriculture management system or the like. Positional information on each of the waiting areas **90** and information representing a field group corresponding to each of the waiting areas **90** are previously recorded in the storage device **650.**

The management device **600** according to the present embodiment determines, from the plurality of waiting areas **90,** a specific waiting area to which each of the agricultural machines is to move after performing a final task of agricultural work on each of working days, based on information representing at least one of a growing state of crop, a state of progress of agricultural work, a state of planting, or a state of weather in the plurality of fields **70.** The management device **600** generates a path from the field where the final task of agricultural work is to be performed on that particular working day, to the specific waiting area. Therefore, a specific waiting area to which each agricultural machine is to move after performing the final task of agricultural work on each working day can be appropriately selected in accordance with various states such as the growing state of crop, the state of progress of agricultural work, the state of planting, or the state of weather.

The growing state of crop, the state of progress of agricultural work, the state of planting or the state of weather influences the work plan. For example, in the case where the growing state of crop or the state of progress of agricultural work is ahead of, or behind, the schedule, the work plan needs to be reviewed. Alternatively, in the case where a task of agricultural work originally scheduled cannot be performed due to bad weather, the work plan after that needs to be reviewed. In the case where an optimal timing for the agricultural work is different by the breed of crop, it may become necessary to adjust the work plan in accordance with the breed of crop that is planted.

As a preparation for the case described above, the management device **600** according to the present embodiment monitors at least one of the growing state of crop, the state of progress of agricultural work, the state of planting, or the state of weather in each field. For generating a path for each agricultural machine for each working day, the management device **600** determines the waiting area where the agricultural machine may wait after finishing the work on that particular working day, based on at least one of the growing state of crop, the state of progress of agricultural work, the state of planting, or the state of weather. For example, the management device **600** determines the distribution of the working days for fields located in the vicinity of each of the plurality of waiting areas, based on at least one of the growing state of crop, the state of progress of agricultural work, the state of planting, or the state of weather. Based on the determined distribution of the working days, the management device **600** determines a specific waiting area to which each agricultural machine is to move after performing the final task of agricultural work on each working day. For example, in order to determine the specific waiting area for each working day, the management device **600** may specify a field group where the agricultural work is to be performed on the next working day, based on the distribution of the working days for the fields in the vicinity of each of the waiting areas, and determine a waiting area closest to the field group as the specific waiting area. Herein, the "waiting area closest to the field group" refers to the waiting area, among the plurality of waiting areas, that is located at the shortest average straight-line distance or the shortest average travel distance from a plurality of fields included in the field group. Such an operation can provide effects of, for example, shortening the travel distance of the agricultural machines and decreasing the time for moving and the amount of consumption of the fuel.

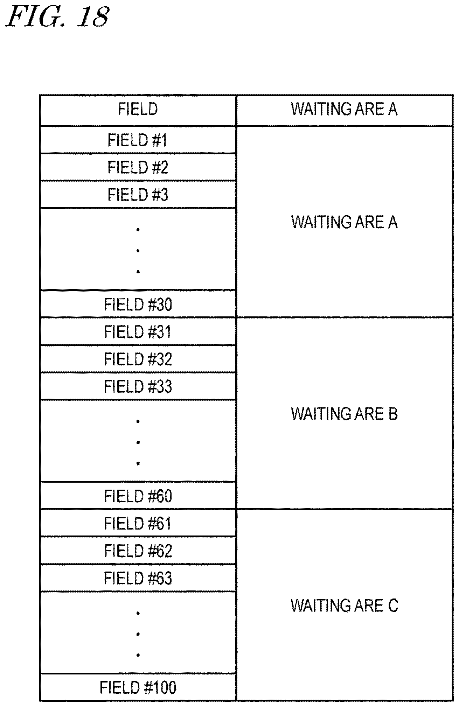

In the present embodiment, data (e.g., a table) showing the correspondence between the plurality of waiting areas and the plurality of fields is previously recorded in the storage device **650.** FIG. **18** shows an example of table providing an example of correspondence between the waiting areas and the fields. In this table, among 100 fields (fields #1 to #100), fields #1 to #30 are associated with waiting area A, fields #31 to #60 are associated with waiting area B, and fields #61 to #100 are associated with waiting area C. In the following description, in the case where one field and one waiting area are associated with each other, the field will be expressed as "belonging" to the waiting area. The table as shown in FIG. **18** may be created in the case where, for example, the waiting area closest to fields #1 to #30 is waiting area A, the waiting area closest to fields #31 to #60 is waiting area B, and the waiting area closest to fields #61 to #100 is waiting area C. The management device **600** can refer to such a table to determine the waiting area close to the field group where the agricultural work is scheduled to be performed on the next working day. The table shown in FIG. **18** is one example. The number of the waiting areas is not limited to three, and may be four or greater. Any number of fields are associated with each waiting area, and there is no limitation on the number of the fields associated with each waiting area. These are also applicable to figures referred to below.

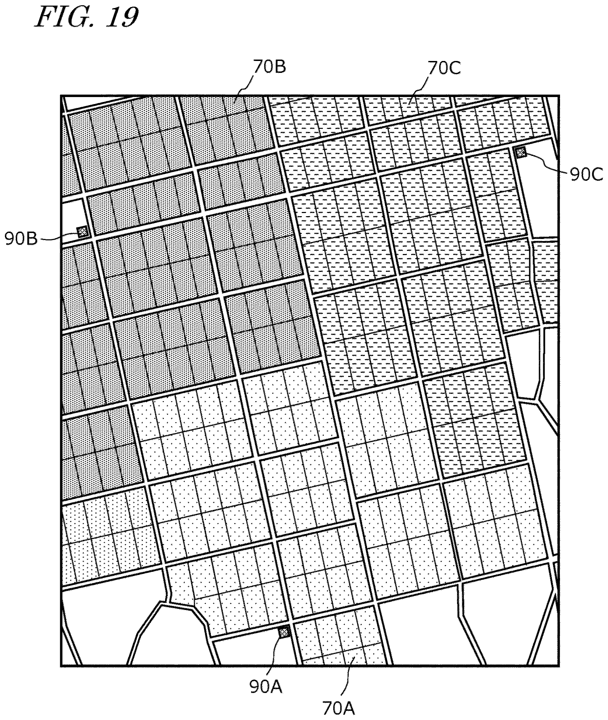

FIG. **19** shows an example of map explicitly representing the correspondence between the waiting areas and the fields. The field group **70A** belonging to the waiting area **90A,** the field group **70B** belonging to the waiting area **90B,** and the field group **70C** belonging to the waiting area **90C** are represented with different patterns. In this manner, each of the fields where the agricultural machine **100** performs agricultural work automatically is associated with one waiting area relatively close thereto. Note that each of the fields does not need to be associated with the waiting area closest thereto. There is a case where it is better to treat the fields close to each other as one group in accordance with the attribute such as the crop to be planted or the owner of the fields. In this case, a group of fields, not individual fields, may be associated with one waiting area. In such a form, a portion of the fields in the group may possibly be associated with a waiting area different from the waiting area closest thereto (e.g., associated with the waiting area second closest thereto).

The management device **600** according to the present embodiment generates, for example, a work plan as shown in FIG. **12** for each agricultural machine, based on data acquired from one or more users. Based on the work plan, the management device 600 determines a path for each agricultural machine for each working day, and instructs each agricultural machine to move along the path and perform agricultural work. The work plan defines the distribution of the working days for the plurality of fields where each agricultural machine is to perform agricultural work. In accordance with the distribution of the working days indicated by the work plan, the management device **600** determines a specific waiting area to which each agricultural machine is to move after finishing the agricultural work on each working day. For determining the specific waiting area, the management device **600** refers to information (e.g., data in the table or the like) representing various states such as the growing state of crop, the state of progress of agricultural work, the state of planting, or the state of weather in each field. The management device **600** updates the work plan in accordance with such a state, and determines the waiting area and the path for each agricultural machine for each working day, in accordance with the distribution of the working days indicated by the updated work plan. The management device **600** may check such a state, for example, every working day or every certain time period, modify the work plan in accordance with the state, and determine the waiting area for each working day in accordance with the modified work plan.

Hereinafter, specific examples of method for determining the waiting area in accordance with the growing state of crop, the state of progress of agricultural work, the state of planting or the state of weather will be described.

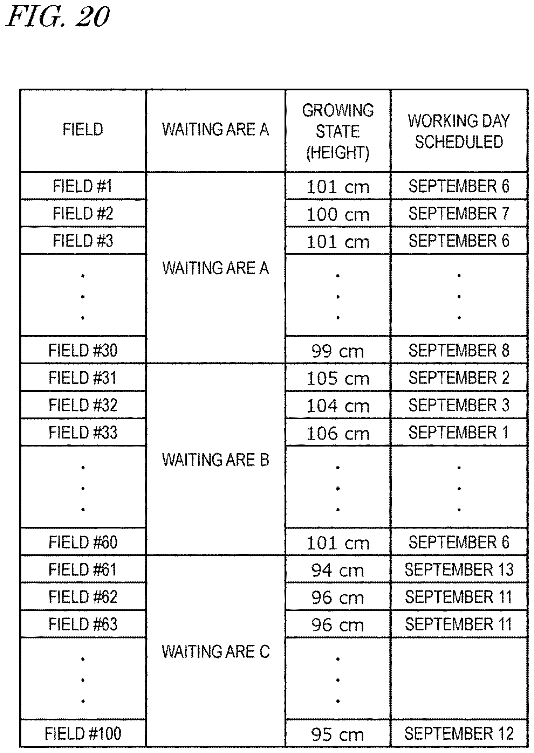

FIG. **20** shows an example of table used to manage the growing state of crop in each field. This table includes information on the growing state of crop (e.g., the average height) in each field and the working days when the agricultural work is to be performed in each field. Data on the growing state of crop may be acquired by, for example, a movable body such as a drone having an LiDAR sensor or a camera mounted thereon. The growing state is not limited to being expressed by the height, and may be expressed by another index such as, for example, the vegetation index. The management device **600** determines the working days when the agricultural work such as harvesting is to be performed in each field, in accordance with the growing state of crop in each field, and writes the working days into the table. For example, the management device **600** determines the working days for each field, such that the work in the field where the crop grows faster is performed earlier. In the example shown in FIG. **20****,** the crop grows relatively fast in fields #31 to #60 belonging to waiting area B, and the crop grows relatively slowly in fields #61 to #100 belonging to waiting area C. In this case, the management device **600** sets the working days for fields #31 to #60 belonging to waiting area C at earlier dates, and sets the workings days for fields #61 to #100 belonging to waiting area C at later dates. The table shown in FIG. **20** includes information representing the correspondence between the waiting areas and the fields for the sake of convenience, but such information may be omitted. In the case where the correspondence between the fields and the waiting areas is recorded in another table, for example, FIG. **18****,** the table shown in FIG. **20** does not need to include the information on the waiting areas. This is also applicable to figures referred to below.

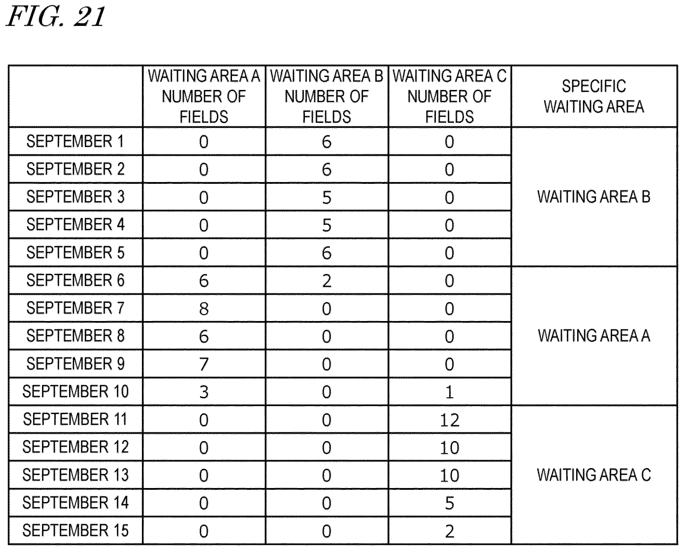

FIG. **21** shows a table providing an example of distribution of the working days for the plurality of fields regarding the growing state shown in FIG. **20****.** The management device **600** counts the number of fields, among the fields belonging to each waiting area, where the agricultural work is to be performed for each working day. For example, for each working day, the management device **600** determines the waiting area having, in the vicinity thereof, the largest number of fields where the agricultural work is to be performed, as the specif ic waiting area to which each agricultural machine is to move after finishing the final task of agricultural work. In the example shown in FIG. **21****,** the management device **600** determines waiting area B as the specific waiting area for September 1 to September 5, determines waiting area A as the specific waiting area for September 6 to September 10, and determines waiting area C as the specific waiting area for September 11 to September 15.

As can be seen, in the example shown in FIG. **20** and FIG. **21****,** the management device **600** updates the distribution of the working days in accordance with the growing state of crop in the plurality of fields, and determines the specific waiting area for each working day in accordance with the updated distribution of the working days. Therefore, the working days for each field can be set such that, for example, the agricultural work is performed sequentially from the field where the crop grows faster. The total travel distance of each agricultural machine can be shortened, and thus the agricultural work can be performed more efficiently.

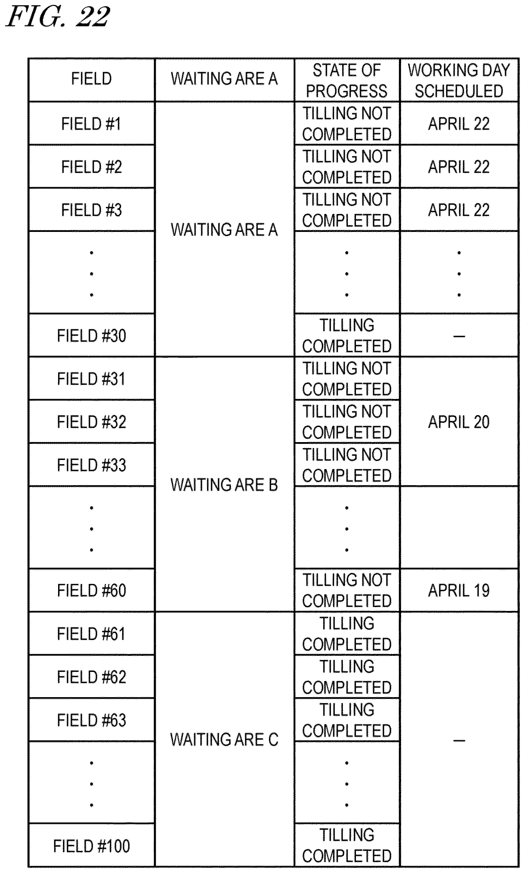

FIG. **22** shows an example of table used to manage the state of progress of agricultural work in each field. This table includes information on the state of progress of a specific task of agricultural work in each field and the working days when the specific task is to be performed in each field. The state of progress may be expressed by, for example, status information indicating whether or not the agricultural work has already been completed at that particular point of time. In the example shown in FIG. **22****,** the task of agricultural work is tilling, and the state of progress is expressed by the status such as "tilling not completed" or " tilling completed". In this example, the management device **600** determines the working days when the task is to be performed for the fields where the state of progress is "tilling not completed", and writes the information into the table. The management device **600** periodically (e.g., every day) determines the working days from among the next day and days thereafter, for the fields where the tilling has not been completed, and thus updates the table. In the example shown in FIG. **22****,** the task in fields #61 to #100 close to waiting area C has already been completed. In this case, the working days may be determined for the remaining fields where the task has not been completed, such that, for example, the agricultural work is performed sequentially from the field closer to the position of the agricultural machine at that point of time. For the field where the agricultural machine has completed tilling, the state of progress is changed from "tilling not completed" to "tilling completed". The change in the state of progress may be automatically performed based on, for example, information such as a notice of task completion that is transmitted from the agricultural machine. Alternatively, when sensing that the agricultural machine finished the task and left the field based on the positional information on the agricultural machine, the management device **600** may determine that the task has been completed and change the state of progress.

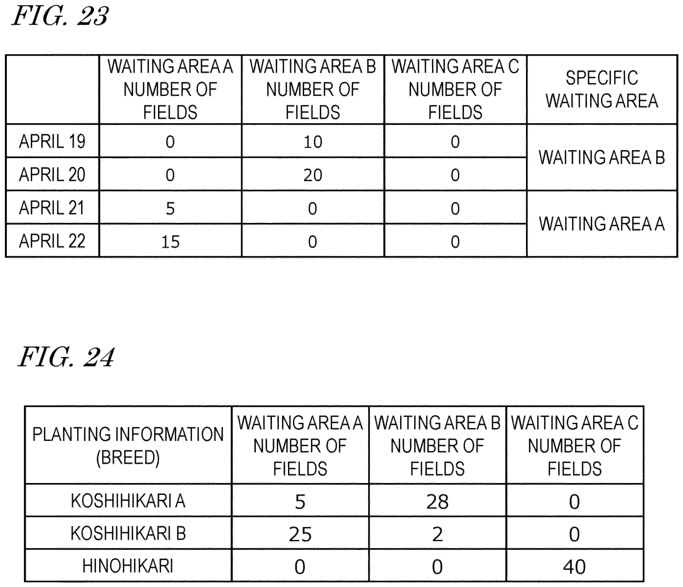

FIG. **23** shows an example of distribution of the working days for the plurality of fields that corresponds to the example shown in FIG. **22****.** For each working day, the management device **600** determines the waiting area having, in the vicinity thereof, the largest number of fields where the agricultural work is to be performed, as the specific waiting area. In this example, on April 19 and April 20, the agricultural work is scheduled to be performed only in the fields belonging to waiting area B. Therefore, waiting area B is determined as the specific waiting area. On April 21 and April 22, the agricultural work is scheduled to be performed only in the fields belonging to waiting area A. Therefore, waiting area A is determined as the specific waiting area. Even after the distribution of the working days is determined in this manner, there may be a case where the task does not proceed as scheduled and the state of progress of the task is behind the schedule. In this case, the management device **600** updates the state of progress and updates the working days for each field based on the updated state of progress.

As can be seen, in the example shown in FIG. **22** and FIG. **23****,** the management device **600** updates the distribution of the working days in accordance with the state of progress of agricultural work in the plurality of fields, and determines the specific waiting area for each working day based on the updated distribution of the working days. Therefore, an appropriate waiting area can be determined in accordance with, for example, the state of progress of agricultural work, and the path planning can be optimized. As a result, the total travel distance of the agricultural machine can be shortened, and the agricultural work can be performed more efficiently.

FIG. **24** shows an example of correspondence between planting information and the number of the fields belonging to each waiting area. The planting information represents, for example, the breed of crop to be planted. In the example shown in FIG. **24****,** breeds of rice such as "Koshihikari A", "Koshihikari B" and "Hinohikari" are recorded as the planting information. In this case, the management device **600** determines the working days for each field, such that the agricultural work in the fields where the same breed of crop is planted is performed in a short time period in a concentrated manner. In the example shown in FIG. **24****,** the fields where "Koshihikari A" is to be planted are concentrated in the vicinity of waiting area B, the fields where "Koshihikari B" is to be planted are concentrated in the vicinity of waiting area A, and the fields where "Hinohikari" is to be planted are concentrated in the vicinity of waiting area C. It is assumed the tasks of agricultural work such as paddling or rice transplanting is performed in the order of "Koshihikari A", "Koshihikari B" and "Hinohikari". In this case, the management device **600** sets the working days for the fields in the vicinity of waiting area B at earlier dates, sets the working days for the fields in the vicinity of waiting area A at dates after the dates for the waiting area B, and sets the working days for the fields in the vicinity of waiting area C at dates after the dates for the waiting area A.

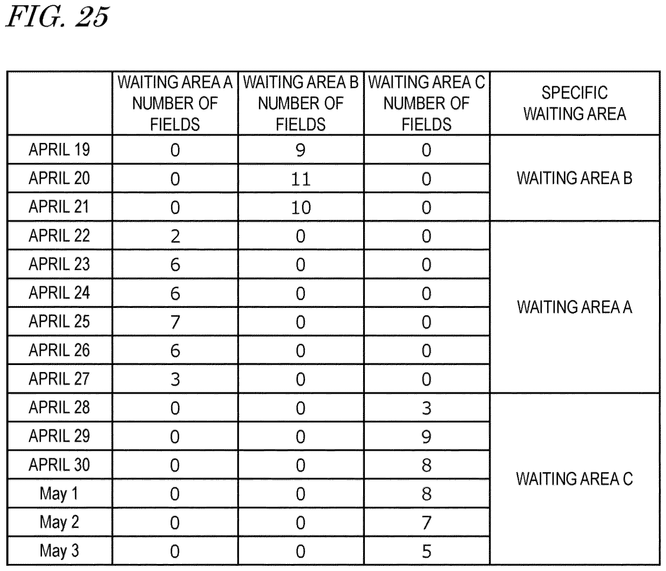

FIG. **25** shows the distribution of the working days for the plurality of fields that corresponds to the example shown in FIG. **24****.** In this example, the management device **600** determines the working days for each field, such that the agricultural machine moves to the fields in the order of the field group belonging to waiting area B, the field group belonging to waiting area A and the field group belong to waiting area C. As a result, the management device **600** determines waiting area B as the specific waiting area for April 19 to April 21, determines waiting area A as the specific waiting area for April 22 to April 27, and determines waiting area C as the specific waiting area for April 28 to May 3.

As can be seen, in the example shown in FIG. **24** and FIG. **25****,** the management device **600** updates the distribution of the working days in accordance with the state of planting in the plurality of fields, and determines the specific waiting area for each working day based on the updated distribution of the working days. Therefore, in the case where, for example, the agricultural work in the field where the same breed of crop is planted needs to be performed in a short time period in a concentrated manner, an appropriate waiting area can be determined and the path planning can be optimized. As a result, the total travel distance of the agricultural machine can be shortened, and the agricultural work can be performed more efficiently.

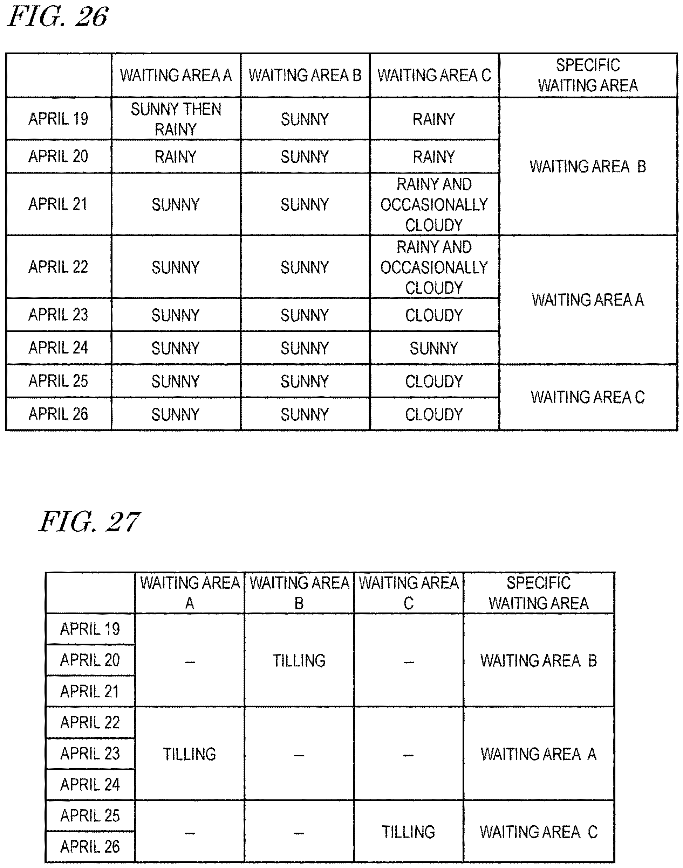

FIG. **26** shows an example of relationship between the state of weather and the specific waiting area on each working day. In this example, waiting areas A, B and C are away from each other to such a degree as to have a different state of weather. The management device **600** acquires meteorological data at the point where each waiting area is located from, for example, a server computer that distributes the meteorological data via a network such as the Internet. In the example shown in FIG. **26****,** it is expected that for several days from April 19, fine weather will be continued only at the point of waiting area B and it will rain on at least one day at the point of each of waiting areas A and C. After that, the weather will be fine in waiting areas A and B, and the weather will become gradually better from being rainy in waiting area C. In this case, the management device **600** determines the working days for each field, such that the agricultural work is first performed in the fields in the vicinity of waiting area B, next in the fields in the vicinity of waiting area A, and then in the fields in the vicinity of waiting area C.

FIG. **27** shows the days when the agricultural work (in this example, tilling) is to be performed in the example shown in FIG. **26** and an example of the selected specific waiting areas. In this example, from April 19 to April 21, tilling is to be performed in the fields in the vicinity of waiting area B. Therefore, waiting area B is selected as the specific waiting area. From April 22 to April 24, tilling is to be performed in the fields in the vicinity of waiting area A. Therefore, waiting area A is selected as the specific waiting area. From April 25 to April 26, tilling is to be performed in the fields in the vicinity of waiting area C. Therefore, waiting area C is selected as the specific waiting area.

As can be seen, in the example shown in FIG. **26** and FIG. **27****,** the management device **600** updates the distribution of the working days in accordance with the state of weather at the point where each of the plurality of waiting areas is located, and determines the specific waiting area for each working day based on the updated distribution of the working days. Therefore, for example, the agricultural work can be performed at a site of fine weather with priority, with the agricultural work being avoided at a site of bad weather. Even in the case where the original schedule needs to be changed due to bad weather, an appropriate waiting area can be determined and the path planning can be optimized. As a result, the agricultural work by the agricultural machine can be performed more efficiently.

In the examples shown in FIG. **20** to FIG. **27****,** the management device **600** determines the specific waiting area in accordance with either one of the growing state of crop, the state of progress of agricultural work, the state of planting, or the state of weather in each field. Instead of performing such an operation, the management device **600** may determine the specific waiting area based on any two or more among the growing state of crop, the state of progress of agricultural work, the state of planting, or the state of weather. These states are considered compositely, so that more appropriate path planning can be performed in accordance with the state and the agricultural machine can be run more efficiently.

As described above, the management device **600** according to the present embodiment determines the distribution of the working days for the fields located in the vicinity of each waiting area, in accordance with at least one of the growing state of crop, the state of progress of agricultural work, the state of planting, or the state of weather in the plurality of fields. Based on the distribution of the working days, the management device **600** determines the specific waiting area to which the agricultural machine is to move after performing the final task of agricultural work on each working day. For, for example, determining the specific waiting area for each working day, the management device **600** may specify the field group where the agricultural work is to be performed on the next working day, based on the distribution of the working days, and determine the waiting area closest to the field group as the specific waiting area. Alternatively, for determining the specific waiting area for each working day, the management device **600** may determine the waiting area closest to a first field, where the final task of agricultural work is to be performed on that particular working day, as the specific waiting area. That is, the management device **600** may determine, as the specific waiting area, the waiting area closest to the first field where the final task of agricultural work is to be performed on that particular working day or the waiting area closest to a second field, where the first task of agricultural work is to be performed on the next working days specified by the distribution of the working days. In the case where the waiting area closest to the first field and the waiting area closest to the second field are different from each other, the management device **600** may determine, from the waiting area closest to the first field and the waiting area closest to the second field, the waiting area that results in a shorter travel distance for the agricultural machine when moving from the first field to the second field via the waiting area, as the specific waiting area. This can shorten the travel distance and the time for moving between the field and the waiting area. Therefore, the agricultural machine can be run efficiently while the amount of consumption of the fuel is suppressed.

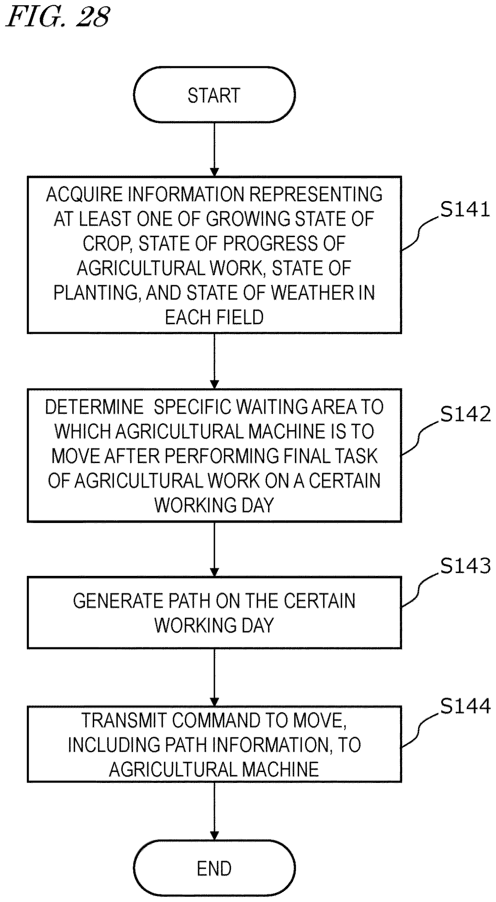

FIG. **28** is a flowchart showing an example operation of the management device **600** according to the present embodiment. The management device **600** performs the operation of steps **S141** to **S144** shown in FIG. **28** and thus can perform global path planning for the agricultural machine for that particular working day and cause the agricultural machine to perform self-driving. The operation for the path planning shown in FIG. **28** may be performed at any timing before the agricultural machine begins to move. The path planning may be performed immediately before the agricultural machine begins to move, or the day before the agricultural machine begins to move or even earlier.

In step **S141,** the management device **600** acquires information representing at least one of the growing state of crop, the state of progress of agricultural work, the state of planting, or the state of weather in each field. The information may be managed by the management device **600** itself or by a device different from the management device **600.** The growing state of crop, the state of progress of agricultural work, the state of planting, and the state of weather may be managed by a plurality of devices in a dispersed manner. The information acquired in this step may be the information shown in FIG. **20****,** FIG. **22****,** FIG. **24** and/or FIG. **26****.**

In step **S142,** the management device **600** determines the specific waiting area to which the agricultural machine is to move after performing the final task of agricultural work on that particular working day. For example, the management device **600** may determine a first field group, where the agricultural work is to be performed on that particular working day, based on the information acquired in step **S141,** and determine a first waiting area closest to the first field group as the specific waiting area. Alternatively, the management device **600** may determine a second field group, where the agricultural work is to be performed on the next working day, based on the information acquired in step **S141,** and determine a second waiting area closest to the second field group as the specific waiting area. In the case where the first waiting area and the second waiting area are different from each other, either the first waiting area and the second waiting area with which the travel distance of the agricultural machine is shorter may be selected as the specific waiting area.

In step **S143,** the management device **600** generates a path for that particular working day. That is, the management device **600** generates a global path from the waiting area as a departure point on that particular working day to the waiting area determined in step **S142** via one or more fields where the agricultural work is to be performed on that particular working day. This path may be determined such that, for example, the total travel distance of the agricultural machine is shortest.

In step **S144,** the management device **600** transmits a command to move, including information on the generated path, to the agricultural machine. This command to move may include, for example, information on the schedule indicating at which point of time in which field the agricultural work is to be performed, in addition to the path information. In response to the command to move, the controller of the agricultural machine causes the agricultural machine to begin self - driving at the designated time and to move along the designated path. The agricultural machine moves while generating a local path along which an object is avoidable, by the method described above with reference to, for example, FIG. **16****.**

As a result of the above-described operation, the management device **600** can generate a path for the agricultural machine for that particular working day. The management device **600** can perform the operation shown in FIG. **28****,** for example, every working day, and thus can generate a path for the agricultural machine for each working day and instruct the agricultural machine to move. Note that after sending the command to move to the agricultural machine, the management device **600** may perform the operation shown in FIG. **28** again to modify the path or the waiting area. For example, while the agricultural machine is moving, it may become impossible to perform the task originally scheduled due to a sudden change in the weather. Even in such a case, the management device **600** performs the operation shown in FIG. **28** (e.g. , every certain time period) after beginning to move, so that the waiting area and the path can be appropriately changed.

The management device **600** according to the above-described embodiment generates a path for a plurality of agricultural machines for each working day. In this case, the management device **600** determines, from a plurality of waiting areas, a specific waiting area to which each agricultural machine is to move after performing the final task of agricultural work on each working day, from a plurality of waiting areas, based on the information representing at least one of the growing state of crop, the state of progress of agricultural work, the state of planting, or the state of weather in a plurality of fields. The management device **600** generates a path from the field where the final task of agricultural work is to be performed, to the specific waiting area, for each agricultural machine. Therefore, an optimal path that makes the total travel distance shortest can be determined for each agricultural machine. Note that it is not necessary that a plurality of agricultural machines are provided. A single agricultural machine may be provided.

### (Embodiment 2)

Now, embodiment 2 of the present disclosure will be described. In the following description, differences from embodiment 1 will be mainly described, and overlapping descriptions will be omitted.

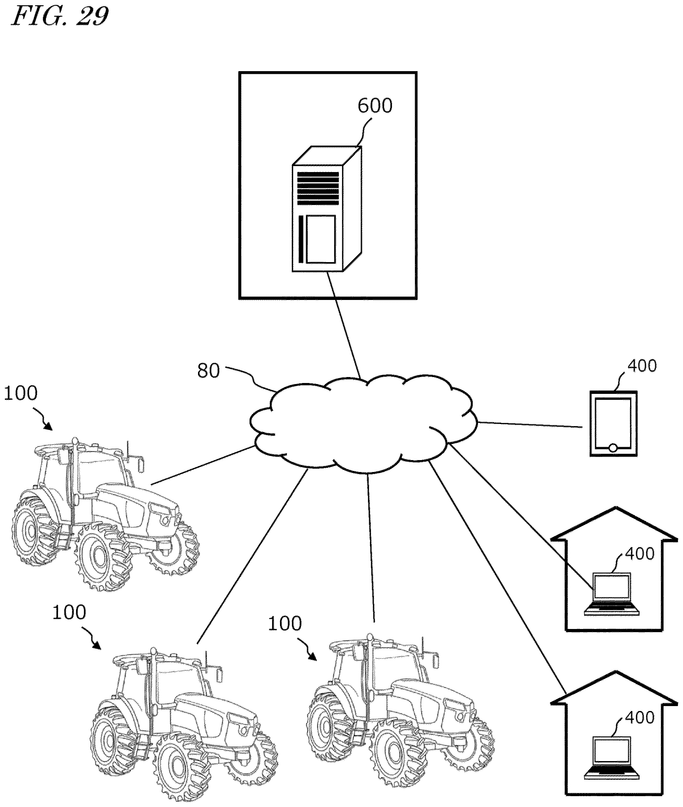

FIG. **29** is a diagram providing an overview of an agriculture management system according to illustrative embodiment 2 of the present disclosure. The agriculture management system shown in FIG. **29** includes a plurality of agricultural machines **100** and a management device **600.** FIG. **29** also shows a plurality of terminal devices **400** usable by a plurality of users. The management device **600** is a computer managed by a business operator running the agriculture management system. Each of the agricultural machines **100** and each of the terminal devices **400** can communicate with the management device **600** via a network **80.** FIG. **1** shows three agricultural machines **100** as an example, but the agriculture management system may include two or less, or four or more agricultural machines **100.** The agriculture management system may include a plurality of different types of agricultural machines such as, for example, a tractor, a rice transplanter, a combine and/or an agricultural drone. The agricultural machines **100** each follow an instruction from the management device **600** to perform the agricultural work assigned thereto in a designated field.

The agriculture management system shown in FIG. **1** may be used for, for example, a service for performing, instead of the user, agricultural work by use of the plurality of agricultural machines **100** performing self-driving. In such a system, the plurality of agricultural machines **100** may each be controlled to move between a plurality of fields managed by a plurality of users having a contract with a party offering the service and to perform the designated agricultural work in the designated field. The management device **600** may create a work plan for each agricultural machine **100** based on information representing a rough plan of agricultural work input by each user by use of his/her terminal device **400,** and perform path planning for each agricultural machine **100** based on the work plan. In the case where the agriculture management service is used for such a service, the management device **600** may execute a process of charging each user. The management device **600** may be an assembly of a plurality of computers. For example, the management device **600** may include a computer creating a work plan for each agricultural machine **100,** a computer performing path planning for each agricultural machine **100** and a computer executing a process of charging each user.

The service of performing agricultural work instead of the user as described above may be provided over a large region such as, for example, a country, a state, a province, a prefecture or a region including a plurality of countries. In this case, the district to which the service is provided may include a plurality of districts that are different in climate or meteorological conditions. The meteorological conditions such as temperature, humidity, rainfall, and sunshine amount may be different among different districts. Therefore, the period to perform each of types of agricultural work (e.g., tilling, seeding, planting, preventive pest control, manure spreading or harvesting) may be different among different districts. Therefore, the management device **600** according to the present embodiment acquires information previously recorded in a storage device and representing a rough guideline for the period for agricultural work for each district, and determines the period when each agricultural machine **100** should perform the agricultural work in each district, based on the information. The information representing a rough guideline for the period for the agricultural work may be created for each type of agricultural work such as, for example, tilling, seeding, planting, preventive pest control, manure spreading or harvesting. The management device **600** determines a path along which each agricultural machine **100** should move, such that each agricultural machine **100** performs a predetermined task of agricultural work in the period determined for each district. The management device **600** refers to a map of the region where each agricultural machine **100** to moves, thus creates a path on the map along which each agricultural machine **100** should move, and transmits the information on the path to the agricultural machine **100.** Each agricultural machine **100** moves based on the received information on the path, and performs the predetermined task of agricultural work in the field assigned thereto. Each agricultural machine **100** has substantially the same configuration as that of the agricultural machine **100** in embodiment 1. Each agricultural machine **100** can travel inside the field and outside the field (e.g., on roads) by self-driving.

The terminal devices **400** are each a computer used by a user located far from the agricultural machines **100.** The terminal devices **400** may each be a mobile terminal such as a laptop computer, a smartphone or a tablet computer as shown in FIG. **29****,** or a stationary computer such as a desktop PC. Each terminal device **400** displays, on a display screen thereof, a setting screen allowing the user to input information necessary to create a work plan (e.g. , a schedule of each task of agricultural work) . When the user inputs necessary information to the setting screen and performs a manipulation to transmit the information, the terminal device **400** transmits the input information to the management device **600.** The management device **600** creates a work plan based on the information. The terminal device **400** may also be used to register one or more fields where the agricultural machine **100** is to perform the agricultural work.

Now, an example operation of path planning according to the present embodiment will be described in more detail.

The management device **600** functions as a path planning system for each agricultural machine **100** performing self -driving over a plurality of districts. The storage device **650** stores a map of a region including a plurality of districts. For example, the storage device **650** stores a map of a relatively large region including a plurality of districts that are different in climate or meteorological conditions. The processor **660** of the management device **600** functions as a processing unit to generate a path (global path described above) on the map for each agricultural machine **100.**

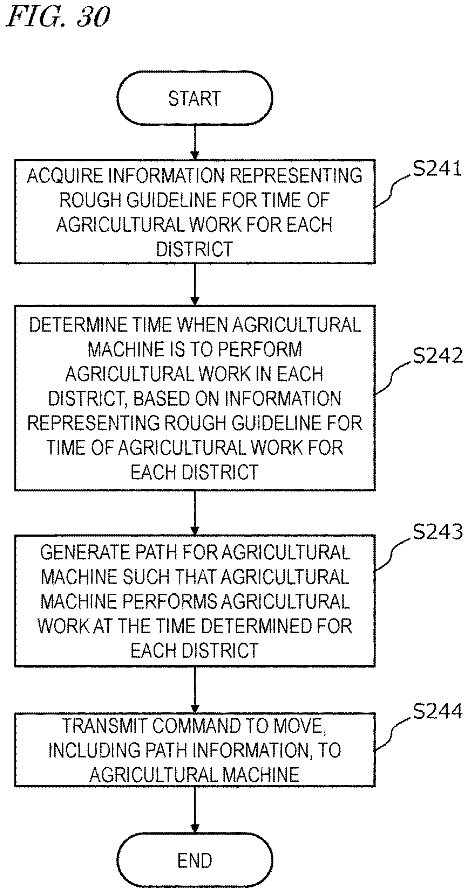

FIG. **30** is a flowchart showing an overview of an operation performed by the management device **600.** In the present embodiment, information representing a rough guideline for the period when each agricultural machine **100** is to perform agricultural work in each district is previously stored in the storage device **650.** The management device **600** acquires the information from the storage device **650** (step **S241).** Based on the information, the management device **600** determines the period when each agricultural machine **100** is to perform agricultural work in each of the plurality of districts (step **S242)** . The management device **600** generates a path on the map for each agricultural machine **100,** such that each agricultural machine **100** performs the agricultural work in the period determined for each district (step **S243).** For example, the management device **600** determines a plurality of working days when each agricultural machine **100** is to perform the agricultural work in the period determined for each district, and generates a path for each agricultural machine **100** for each of the working days. The management device **600** transmits a command to move, including information on the generated path, to the agricultural machine **100** (step **S244)** . This command to move may include, for example, information on the schedule indicating at which point of time in which field the agricultural work is to be performed, in addition to the path information. In response to the command to move, the controller **180** of each agricultural machine **100** causes the agricultural machine **100** to begin self-driving at the designated time, to move along the designated path and to perform the agricultural work in the field.

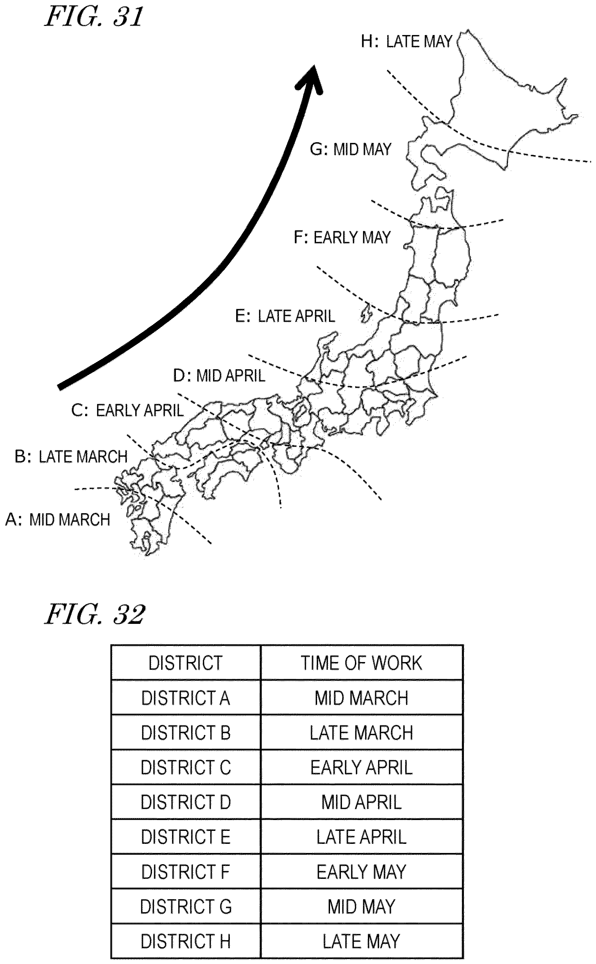

FIG. **31** shows an example of region where the agricultural machines **100** move. In this example, each agricultural machine **100** moves in a large range in all over Japan for a relatively long time period (e.g. , several weeks to several months or longer), and performs agricultural work in the fields in each district. In the example shown in FIG. **31****,** the region where the agricultural machines **100** perform agricultural work is divided into eight districts A to H. Region A is the southmost district, and districts B, C, D, E, F, F and G are distributed from south to north in this order. District H is the northmost district.

Each district shown in FIG. **31** has an area size of 10,000 km² or larger and 100,000 km² or smaller, and may include 1000 or more fields. Each district may be larger or smaller than in this example. Each district may, for example, have an area size of 30 km² or larger and/or include 100 or more fields. People and things can go back and forth between two districts adjacent to each other via roads. In this specification, a farmland surrounded and thus demarcated by a pathway such as a ridge or an agricultural road is one field. Each field may be, for example, an agricultural field, a rice paddy, an orchard or a pasture.

FIG. **32** shows an example of information representing a rough guideline for the period for agricultural work for each district in the example shown in FIG. **31****.** The information representing a rough guideline for the period for agricultural work for each district may be created in, for example, the form of a table as shown in FIG. **32****.** The table shown in FIG. **32** represents a rough guideline for the period (e.g., recommended period) when a certain type of agricultural work is to be performed in each district. Such a table may be created, for, for example, each type of agricultural work and recorded in the storage device **650.**

In a country located in the northern hemisphere like Japan, it generally tends to be warmer in a southern district and cooler in a northern district. In such a country, the recommended period for various types of agricultural work performed to grow crops (e.g., tilling, seeding, planting, manure spreading, preventive pest control, mowing, or harvesting tends to early in a southern district and late in a northern district. In the case where the recommended period for individual type of agricultural work is different for each district, it is preferred to determine the period when the agricultural machine **100** is to perform the agricultural work at the recommended period for each district. For example, it may be preferred to control the movement of the agricultural machine **100** in accordance with the change in the temperature, such that the agricultural machine **100** performs agricultural work in a relatively warm district and then move to a colder district to perform agricultural work. Thus, the management device **600** according to the present embodiment determines the period when each agricultural machine **100** is to perform agricultural work in each district, based on the information representing a rough guideline for the period for agricultural work for each district as shown in FIG. **32****.** The management device **600** determines a path for each agricultural machine **100** for each working day, such that each agricultural machine **100** performs the agricultural work in the period determined for each district. For example, the management device **600** may create a work plan for each agricultural machine **100** over a plurality of working days, based on the information representing a rough guideline for the period for agricultural work for each district, and generate a path for each agricultural machine **100** for each working day in accordance with the work plan. Each agricultural machine **100** moves along the generated path and performs the agricultural work in the field indicated by the work plan. Each agricultural machine **100** may automatically travel on roads including a public road in order to move between the districts.

In the example shown in FIG. **31** and FIG. **32****,** the information representing a rough guideline for the period for agricultural work for each district indicates that the period for agricultural work tends to be later for a norther district. In this case, the management device **600** determines the period when the agricultural machine **100** is to perform agricultural work in each district, such that the agricultural machine **100** gradually moves north as days go by, in accordance with this tendency. Oppositely, there is a case the information representing a rough guideline for the period for agricultural work for each district indicates a tendency that the period for agricultural work tends to be later for a southern district. For example, in the southern hemisphere, it is generally warmer in a southern district and cooler in a southern district. The information may show a tendency that the period for agricultural work is later for a southern district. In this case, the management device **600** may determine the period when the agricultural machine **100** is to perform the agricultural work in each district, such that the agricultural machine **100** gradually moves south as days go by, in accordance with this tendency. As can be seen, the management device **600** may generate a path for each agricultural machine **100** for each working day, such that the agricultural machine **100** gradually moves from a district of a relatively high temperature to a district of a relatively low temperature in accordance with the change in the temperature.

Herein, a zone where the climate or the meteorological state is suitable for a certain type of agricultural work in a certain period will be referred to as "work front" after the term "front" used in meteorology. In the example shown in FIG. **31****,** the work front generally moves from south to north as days go by. However, the work front does not always show such a simple movement. The climate may be changed by various geographical conditions such as, for example, the altitude, the topography, and the degree of influence of seasonal wind, in addition to the latitude. In addition, the recommended period may be different even for the same type of agricultural work because different breeds of crops are grown in different districts. Therefore, in general, the work front does not always simply move from south to north or from north to south. Even in such a case, information representing a rough guideline for the period for agricultural work for each district is appropriately created, so that the agricultural work can be performed at an appropriate period in each district.

Information representing a rough guideline for the period for agricultural work for each district may be created based on, for example, information on the recommended period for each type of agricultural work that is published by an organization in each district such as an agricultural cooperative. The information may be created by a manager of the system or may be automatically created by the system based on information published on the Internet or the like. The information may be changed for each season of agricultural work or may be used for a plurality of seasons after being created.

In the example shown in FIG. **31** and FIG. **32****,** each agricultural machine **100** performs agricultural work in all the eight districts shown. The agricultural machines **100** are not limited to performing in this form, and each agricultural machine **100** may perform agricultural work only in one or some of the districts. For example, the district where each agricultural machine **100** is to perform agricultural work may be previously defined. In one example, different groups of agricultural machines may perform agricultural work in different districts. In this case, the management device **600** may create a work plan for each agricultural machine **100,** such that a first group of agricultural machines **100** perform agricultural work in a plurality of fields in district A in a first period (e.g., mid March) and then a second group of agricultural machines **100** perform agricultural work in fields in district B in a second period (e.g. , late March) . Similarly for districts C to H, a work plan for each agricultural machine may be created such that a group of agricultural machines assigned to each of the districts perform agricultural work in fields in the respective district in an appropriate period based on information representing a rough guideline for the period for agricultural work. Alternatively, one group of agricultural machines may perform agricultural work in fields in two or more districts, such that the first group of agricultural machines are assigned to districts A and B, the second group of agricultural machine **100** are assigned to districts B and C, and a third group of agricultural machine **100** are assigned to districts C and D.

The system according to the present embodiment may be used to perform a plurality of types of agricultural work in a plurality of districts by a plurality of types of agricultural machines. For example, a plurality of types of agricultural work may be performed in a plurality of districts by a plurality of agricultural machines such as a tractor, a rice transplanter, a mower, a drone and/or a combine.

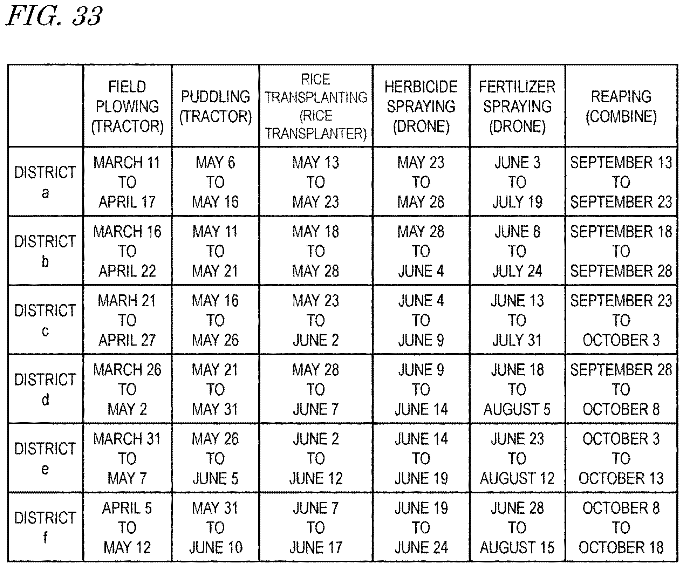

FIG. **33** shows another example of information representing a rough guideline for the period for agricultural work for each district. FIG. **33** shows an example of table including information representing a rough guideline for the period, for each district, for a plurality of types of agricultural work to be performed for rice farming in rice paddies. In this example, the region where the agricultural machines **100** perform agricultural work is divided into six districts a to f. In the table shown in FIG. **33**, a rough guideline (e.g., recommended period), for each district, for each of six types of agricultural work (plowing of the field, puddling, rice transplanting, spraying of herbicides, spraying of fertilizers. and reaping) is recorded. Note that the types of agricultural work are not limited to these examples, and there are various types of agricultural work in accordance with the crop to be grown. As shown in FIG. **33**, different types of agricultural machines may be used for different types of agricultural work. For example, plowing of the field and puddling may be performed by a tractor having an implement (e.g., a rotary, a plow, a harrow, etc.) attached thereto. Rice transplanting may be performed by a rice transplanter. Spraying of herbicides and spraying of fertilizers may be performed by a drone. Reaping may be performed by a combine. In the example shown in FIG. **33**, unlike in FIG. **32**, the rough guideline for the period for agricultural work is expressed as terms including information on specific dates (e.g. , March 11 to April 17) . In this manner, information representing a rough guideline for the period for agricultural work may be recorded in any of various forms. Note that in the case where travel of a specific agricultural machine (e.g., a rice transplanter or a combine, etc.) on a public road is restricted by the law, the system may be configured so as not to include such an agricultural machine.

The management device **600** according to the present embodiment creates a work plan for each agricultural machine **100** based on information representing a rough guideline for the period for one or more types of agricultural work for each district as shown in FIG. **32** or FIG. **33****.** In accordance with the created work plan, the management device **600** generates a path for each agricultural machine **100** for each working day and instructs each agricultural machine **100** to move and perform agricultural work.

The work plan includes information on one or more tasks of agricultural work to be performed by each agricultural machine **100.** For example, the work plan includes information on one or more tasks of agricultural work to be performed by each agricultural machine **100** and on the field where each task of agricultural work is to be performed. The work plan may include information on a plurality of tasks of agricultural work to be performed by each agricultural machine **100** over a plurality of working days and on the field where each task of agricultural work is to be performed. More specifically, the work plan may be a database including information on a work schedule indicating which agricultural machine is to perform which task of agricultural work in which field at which point of time on each working day. Hereinafter, an example case where the work plan is data of such a work schedule will be described.

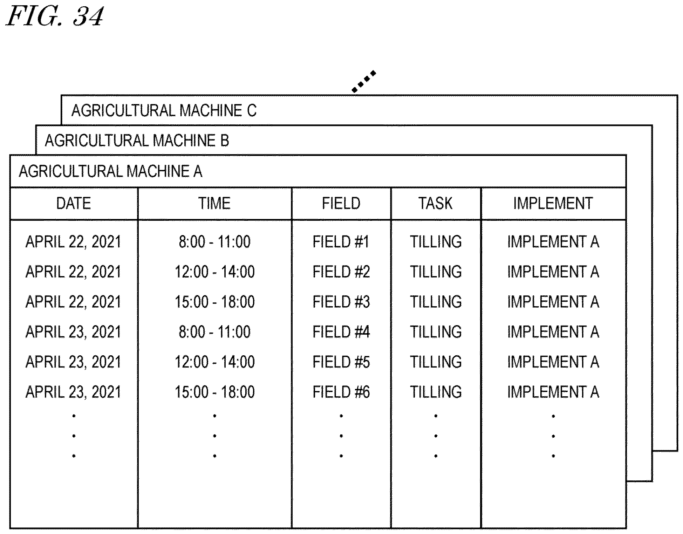

FIG. **34** shows an example of work plan for each agricultural machine **100.** The work plan in this example includes information representing the date and time for the agricultural work, the field for the agricultural work, the contents of the work, and the implement to be used, for each of the registered agricultural machines **100.** The work plan is not limited to being of the form shown in FIG. **34**, and may include other information on the work. For example, the work plan may include information on the types or the spray amounts of agricultural chemicals or fertilizers. In accordance with such a work plan, the processor **660** of the management device **600** generates a path for each agricultural machine **100** for each working day and instructs each agricultural machine **100** to perform the agricultural work. The work plan may be downloaded by the controller **180** of the agricultural machine **100** and may also stored in the storage device **170.** In this case, the controller **180** may spontaneously begin the operation in accordance with the work plan stored in the storage device **170.**

The management device **600** may create a work plan based on information input by each user by use of the terminal device **400,** in addition to the information representing a rough guideline for the period for agricultural work. For example, the management device **600** may create a work plan based on information representing a rough plan for each type of agricultural work to be performed in one or more fields managed by each user.

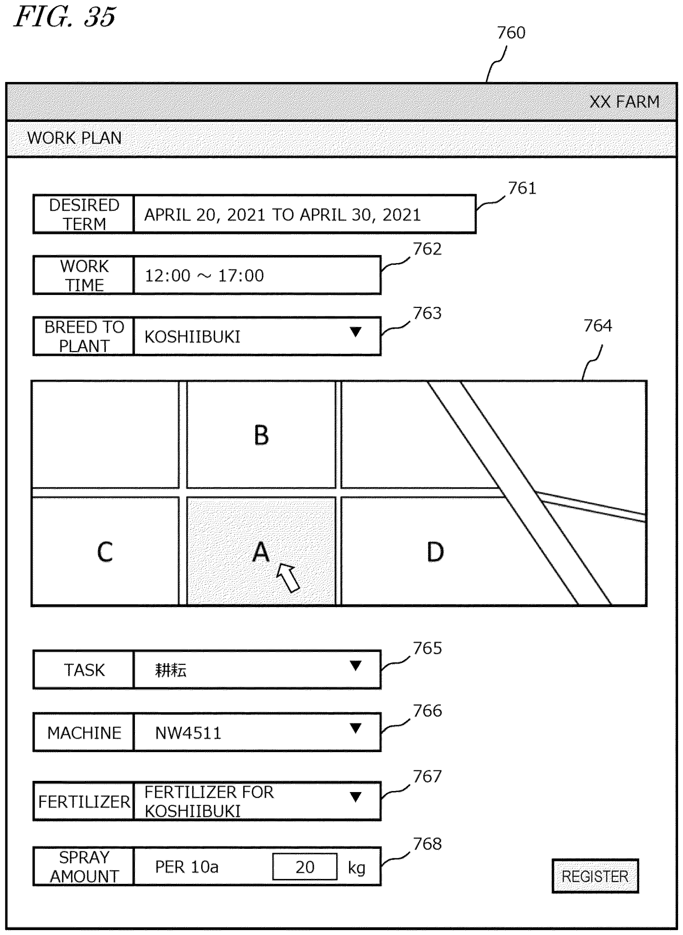

FIG. **35** shows an example of setting screen **760** displayed on the display device **430** of the terminal device **400.** In response to a manipulation performed by the user by use of the input device **420,** the processor **460** of the terminal device **400** starts application software for work plan creation, and thus causes the display device **430** to display the setting screen **760** as shown in FIG. **35****.** The user can input information on a rough plan necessary to create a work plan on the setting screen **760.**

FIG. **35** shows an example of the setting screen **760** in the case where tiling accompanied by spraying of a fertilizer is to be performed as agricultural work in a field for rice farming. The setting screen **760** is not limited to the one shown here, and may be appropriately changed. The setting screen **760** in the example shown in FIG. **35** includes a term setter **761,** a time setter **762,** a planting breed selector **763,** a field selector **764,** a work selector **765,** a machine selector **766,** a fertilizer selector **767,** and a spray amount setter **768.**

The term setter **761** displays the term input by the user. The user inputs a term when he/she wants the agricultural work to be performed. A day included in the input term is set as a candidate for the day when the agricultural work is to be performed.

The time setter **762** displays a work time period input by the user. The user inputs a work time period when he/she wants the agricultural work to be performed. The work time period is specified by a point of time to begin the agricultural work and a point of time to end the agricultural work. The input work time period is set as a candidate for the time period when the agricultural work is to be performed.

The planting breed selector **763** displays a list of breeds of crops to be planted (i.e., seeded). The user can select a desired breed from the list. In the example shown in FIG. **35****,** rice breed "Koshiibuki" is selected.

The field selector **764** displays the fields in the map. The user can select any field from the fields displayed. In the example shown FIG. **35****,** a region indicating "field A" is selected. In this case, the selected "field A" is set as the field where the agricultural work is to be performed. The user can select a plurality of fields at the same time.

The work selector **765** displays a plurality of types of agricultural work necessary to grow the selected crop. The user can select one type of agricultural work from the plurality of types of agricultural work. In the example of FIG. **35****,** "tilling" is selected from the plurality of types of agricultural work. In this case, the selected "tilling" is set as the agricultural work to be performed.

The machine selector **766** is used to set the agricultural machine to be used for the agricultural work. The machine selector **766** may display, for example, the types or models of the agricultural machines previously registered by the management device **600** and the types, models, etc. of usable implements. The user can select a specific machine from the machines displayed. In the example shown in FIG. **35****,** the implement of model "NW4511" is selected. In this case, this implement is set as the machine to be used for the agricultural work.

The fertilizer selector **767** displays names of a plurality of fertilizers registered previously. The user can select a specific fertilizer from the plurality of fertilizers displayed. The selected fertilizer is set as the fertilizer to be used for the agricultural work.

The spray amount setter **770** displays a numerical value input by the input device **420.** The input numerical value is set as the spray amount.

When the term, the work time period, the planting breed, the field, the type of agricultural work, the fertilizer and the spray amount that are desired are input to the setting screen **760** and "register" is selected, the communication device **490** of the terminal device **400** transmits the input information to the management device **600.** The processor **660** of the management device **600** causes the storage device **650** to store the received information.

Note that the information on the agricultural work managed by the management device **600** is not limited to the above-described information. For example, the type and the spray amount of the agricultural chemical to be used in the field may be set on the setting screen **760.** Information on a type of agricultural work other than the type shown in FIG. **35** may be set.

The management device **600** creates a work plan for a type of agricultural work to be performed by each agricultural machine **100,** based on the information received from the terminal device **400** of each user and the information representing a rough guideline for the period for the type of agricultural work for each district. For example, the management device **600** determines the actual working day and the actual work time period for each type of agricultural work for each district, in consideration of the desired term and the desired work time period for type of the agricultural work input by each user and the information representing a rough guideline for the period for the type of agricultural work. Specifically, the management device **600** determines the date and time when the agricultural work is to be actually performed in each field, in comprehensive consideration of the number, the distribution and the state of use of the agricultural machines **100** located in the district, the distribution of the fields where the agricultural work is to be performed in the district, the date and time desired by each user, and a rough guideline for the period for the work in the district. For determining the date and time when the agricultural work is to be performed in each field, an algorithm using artificial intelligence (AI) such as, for example, a deep neutral network or the like may be used. The management device **600** notifies the terminal device **400** used by the user of the determined date and time for the agricultural work. In the case where the determined date and time is different from the date and time desired by the user, information indicating such information may be notified. The management device **600** performs path planning for each agricultural machine **100** for each working day, based on the determined date and time when the agricultural work is to be performed in each field.

Hereinafter, a specific example of method for path planning for the agricultural machine **100** for each working day will be described. In the example described below, the agricultural machine **100** is a work vehicle such as a tractor, and a path outside the field is generated on a road (an agricultural road or a general road). Note that in the case where the agricultural machine **100** is an aerial vehicle such as a drone, the path outside the field does not need to be generated on a road.

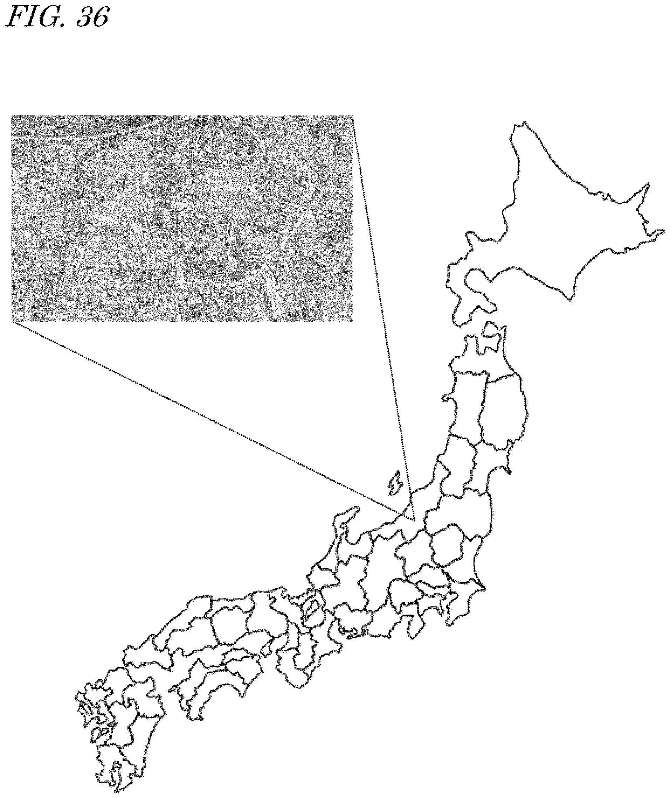

FIG. **36** shows an example of map referred to at the time of path planning. FIG. **36** shows a small example of map of a certain district of Japan. This map corresponds to the map shown in FIG. **17****.** This map is a two-dimensional digital map, and may be created by the management device **600** or another device. Such a map may be previously created for the entirety of the district where the agricultural machine **100** moves, and is recorded in the storage device **650.** Note that the maps shown in FIG. **36** and FIG. **17** are two-dimensional maps, but a three-dimensional map may be used for path planning.

As described above, the map shown in FIG. **17** includes information on the position of each of points (e.g. , the latitude and the longitude of each of the points) in the plurality of fields **70** where the agricultural machine **100** is to perform agricultural work and the road **76** around the fields **70.** This map further includes positional information on the plurality of waiting areas **90,** where the agricultural machine **100** may wait temporarily. For example, the waiting areas **90** may be previously registered by a manager of the agriculture management system and recorded in the storage device **650.**

The map as shown in FIG. **17** may be created for the entirety of a district where the agricultural machine **100** moves. As can be seen, the map may include information on a plurality of fields, a plurality of waiting areas, and a road connecting the plurality of fields and the plurality of waiting areas to each other in each district.

Before the agricultural work begins on each of the working days, the management device **600** reads, from the storage device **650,** a map of a region including the fields where the agricultural work is to be scheduled on that particular working day, and generates a path (global path) for the agricultural machine **100** based on the map and the work plan. Based on the work plan, the management device **600** determines, from a plurality of waiting areas, a specific waiting area to which the agricultural machines **100** is to move after performing the final task of agricultural work on each of working days, and generates a path from the field where the final task of agricultural work is to be performed, to the specific waiting area. The method for generating a path for the agricultural machine **100** for each working day is substantially the same as the method in embodiment 1. As described above with reference to, for example, FIG. **14** or FIG. **15****,** the management device **600** can generate a path for the agricultural machine **100** for each working day.

After creating a work plan, the management device **600** may modify the work plan in accordance with the state. For example, the management device **600** may update the work plan in accordance with at least one of the growing state of crop in the plurality of fields, the state of progress of agricultural work, the state of planting, or the state of weather, by substantially the same method as that in embodiment 1. In this case, the management device **600** generates a path for the agricultural machine **100** for each working day, in accordance with the updated work plan. As a result, the path for the agricultural machine **100** for each working day can be appropriately set in accordance with any of various states such as the growing state of crop, the state of progress of agricultural work, the state of planting, or the state of weather.

The growing state of crop, the state of progress of agricultural work, the state of planting or the state of weather influences the work plan. For example, in the case where the growing state of crop or the state of progress of agricultural work is ahead of, or behind, the schedule, the work plan needs to be reviewed. Alternatively, in the case where a task of agricultural work originally scheduled cannot be performed due to bad weather, the work plan after that task needs to be reviewed. In the case where optimal period for the agricultural work is different among the breeds of crops, it may become necessary to adjust the work plan in accordance with the breed of crop that is planted.

As a preparation for the case described above, the management device **600** may monitor at least one of the growing state of crop, the state of progress of agricultural work, the state of planting, or the state of weather in each field. For generating a path for the agricultural machine **100** for each working day, the management device **600** may modify the work plan of that particular working day and thereafter, based on at least one of the growing state of crop, the state of progress of agricultural work, the state of planting, or the state of weather. Based on the modified work plan, the management device **600** may determine the distribution of the working days for the fields in the vicinity of each of the plurality of waiting areas . Based on the determined distribution of the working days, the management device **600** can determine a specific waiting area to which the agricultural machine **100** is to move after performing the final task of agricultural work on each working day, and generate a path between fields and a path connecting a field and a waiting area to each other. For determining the specific waiting area for each working day, the management device **600** may, for example, specify the field group where the agricultural work is to be performed on the next working day, based on the distribution of the working days for the fields in the vicinity of each of the waiting areas, and determine the waiting area closest to the field group as the specific waiting area. Such an operation can provide effects of, for example, shortening the travel distance of the agricultural machines and decreasing the time for moving and the amount of consumption of the fuel.

In the present embodiment also, as shown in the examples of FIG. **20** to FIG. **27****,** the management device **600** may be configured to modify the work plan in accordance with at least one of the growing state of crop, the state of progress of agricultural work, the state of planting, or the state of weather in each field. Instead of performing such an operation, the management device **600** may modify the work plan based on any two or more among the growing state of crop, the state of progress of agricultural work, the state of planting, or the state of weather. Comprehensive consideration of these state allows more appropriate path planning to be performed in accordance with the state, and allows the agricultural machine to be run more efficiently.

### (Other embodiments)

The configurations and operations in the above-described embodiments are merely examples, and the present disclosure is not limited to the above-described embodiments. Hereinafter, other example embodiments will be described.

In embodiment 1 described above, the processor **660** of the management device **600** manages at least one of the growing state of crop, the state of progress of agricultural work, the state of planting, or the state of weather in each field, and also determines the waiting area for each working day and performs global path planning for the agricultural machine. Alternatively, for example, a processing unit different from the management device **600** may determine the waiting area for each working day and perform global path planning for the agricultural machine. In this case, the processing unit can acquire, from the management device **600,** the information representing at least one of the growing state of crop, the state of progress of agricultural work, the state of planting, or the state of weather, determine the specific waiting area for each working day based on the information, and generate a path for the agricultural machine. Such a processing unit may be a controller provided in the agricultural machine.

In embodiment 2 described above, the processor **660** of the management device **600** creates a work plan for the agricultural machine **100** based on information representing a rough guideline for the period for agricultural work for each district, and performs path planning for the agricultural machine **100** based on the work plan. Alternatively, for example, a processing unit different from the management device **600** may perform path planning for the agricultural machine **100.** In this case, the processing unit can acquire the work plan from the management device **600,** and generate a path for the agricultural machine **100** for each working day based on the information. Such a processing unit may be a controller provided in the agricultural machine **100.** Note that in the above-described embodiment, the system includes a plurality of agricultural machines **100.** Alternatively, there may be a single agricultural machine **100.**

The techniques in each of the above-described embodiments are not limited to being applied to a work vehicle such as a tractor, and may be applied to, for example, an agricultural drone (i.e., UAV). A processing unit performing path planning for an agricultural drone does not need to generate a path along the roads **76,** unlike in the example shown in FIG. **16****.** For example, a path directly connecting a waiting area and a field and a path directly connecting fields may be generated as a path for the agricultural drone.

A system performing the path planning or self-driving control according to the above-described embodiments can be mounted on an agricultural machine lacking such functions, as an add-on. Such a system may be manufactured and marketed independently from the agricultural machine. A computer program for use in such a system may also be manufactured and marketed independently from the agricultural machine. The computer program may be provided in a form stored in a non-transitory computer-readable storage medium, for example. The computer program may also be provided through downloading via telecommunication lines (e.g., the Internet).

As described above, the present disclosure includes a path planning system, a control system for an agricultural machine, and an agricultural machine described in the following items.

### [Item 1]

A path planning system for an agricultural machine performing self-driving, the path planning system comprising:
a storage device to store a map including a plurality of fields, a plurality of waiting areas, and a road connecting the plurality of fields and the plurality of waiting areas to each other; and
a processing unit to generate a path on the map for the agricultural machine for each of working days,
wherein the processing unit:
   determines, from the plurality of waiting areas, a specific waiting area to which the agricultural machine is to move after performing a final task of agricultural work on each working day, based on information representing at least one of a growing state of crop in the plurality of fields, a state of progress of agricultural work in the plurality of fields, a state of planting in the plurality of fields and a state of weather, and
   generates a path from the field where the final task of agricultural work is to be performed, to the specific waiting area.

According to the above-described configuration, an appropriate waiting area can be determined for each working day based on at least one of the growing state of crop, the state of progress of agricultural work, the state of planting, or the state of weather in the plurality of fields, and a path from the field where the final task of agricultural work on that particular working day to the waiting area can be generated. As a result, an appropriate waiting area can be determined in accordance with the state of each working day with no need to previously determine the waiting area.

### [Item 2]

The path planning system of item 1, wherein the processing unit:
determines a distribution of the working days in fields in the vicinity of each of the plurality of waiting areas, based on at least one of the growing state of crop, the state of progress of agricultural work, the state of planting, or the state of weather, and
determines the specific waiting area for each working day, based on the distribution of the working days.

According to this, a distribution of working days in the fields in the vicinity of each of the waiting areas can be appropriately determined based on at least one of the growing state of crop in the plurality of fields, the state of progress of agricultural work in the plurality of fields, the state of planting in the plurality of fields, or the state of weather, and a specific waiting area for each working day can be appropriately determined based on the distribution of working days.

### [Item 3]

The path planning system of item 2, wherein for determining the specific waiting area for each working day, the processing unit specifies a group of fields where the agricultural work is to be performed on a next working day, based on the distribution of the working days, and determines a waiting area closest to the group of fields as the specific waiting area.

According to this, the agricultural machine can be moved to the waiting area closest to the group of fields where the agricultural work is to be performed on the next working day. Therefore, the travel distance of the agricultural machine can be shortened, and the consumption of energy caused by the movement can be suppressed.

### [Item 4]

The path planning system of item 2, wherein for determining the specific waiting area for each working day, the processing unit determines a waiting area closest to a first field where the final task of agricultural work is to be performed on the working day, or a waiting area closest to a second field where a first task of agricultural work is to be performed on the next working day specified from the distribution of the working days, as the specific waiting area.

According to this, the agricultural machine can be moved to the waiting area closest to the first field where the final task of agricultural work is to be performed on each working day or to the second field where the first task of agricultural work is to be performed on the next working day. Therefore, the travel distance of the agricultural machine can be shortened, and the consumption of energy caused by the movement can be suppressed.

### [Item 5]

The path planning system of item 4, wherein the processing unit determines, as the specific waiting area, the one between the waiting area closest to the first field and the waiting area closest to the second field that results in a shorter travel distance for the agricultural machine when moving from the first field to the second field via the waiting area.

According to this, the agricultural machine can be moved to the waiting area with which the travel distance is shorter, among the waiting area closest to the first field where the final task of agricultural work is to be performed on each working day and the waiting area closest to the second field where the first task of agricultural work is to be performed on the next working day. Therefore, the consumption of energy caused by the movement of the agricultural machine can be further suppressed.

### [Item 6]

The path planning system of any one of items 2 to 5, wherein the processing unit updates the distribution of the working days in accordance with the growing state of crop in the plurality of fields.

According to this, an appropriate waiting area can be determined based on the distribution of working days updated in accordance with the growing state of crop, and the agricultural machine can be moved to the waiting area.

### [Item 7]

The path planning system of any one of items 2 to 6, wherein the processing unit updates the distribution of the working days in accordance with the state of progress of agricultural work in the plurality of fields.

According to this, an appropriate waiting area can be determined based on the distribution of working days updated in accordance with the state of progress of agricultural work, and the agricultural machine can be moved to the waiting area.

### [Item 8]

The path planning system of any one of items 2 to 7, wherein the processing unit updates the distribution of the working days in accordance with the state of planting in the plurality of fields.

According to this, an appropriate waiting area can be determined based on the distribution of working days updated in accordance with the state of plating, and the agricultural machine can be moved to the waiting area.

### [Item 9]

The path planning system of any one of items 2 to 8, wherein the processing unit updates the distribution of the working days in accordance with the state of weather in a district where each of the plurality of waiting areas is located.

According to this, an appropriate waiting area can be determined based on the distribution of working days updated in accordance with the state of weather, and the agricultural machine can be moved to the waiting area.

### [Item 10]

The path planning system of any one of items 1 to 9, wherein for determining the specific waiting area for each working day, the processing unit acquires the information from a management device managing at least one of the growing state of crop, the state of progress of agricultural work, the state of planting, or the state of weather.

According to this, the processing unit can grasp at least one of the growing state of crop, the state of progress of agricultural work, the state of planting, or the state of weather based on the information acquired from the management device, and can determine an appropriate waiting area.

### [Item 11]

The path planning system of any one of items 1 to 10, wherein the processing unit transmits information representing the generated path, or a command to move the agricultural machine along the path, to the agricultural machine.

According to this, the agricultural machine can move along the appropriate path generated by the processing unit.

### [Item 12]

The path planning system of any one of items 1 to 11, wherein the processing unit:
generates a path for a plurality of agricultural machines including the agricultural machine for each working day,
determines, from the plurality of waiting areas, a specific waiting area to which each of the agricultural machines moves after performing the final task of agricultural work on each working day, based on the information representing at least one of the growing state of crop in the plurality of fields, the state of progress of agricultural work in the plurality of fields, the state of planting in the plurality of fields, or the state of weather, and
generates a path from the field where the final task of agricultural work is to be performed, to the specific waiting area, for each of the agricultural machines.

According to this, the path for the plurality of agricultural machines over the plurality of working days can be appropriately determined in accordance with at least one of the growing state of crop in the plurality of fields, the state of progress of agricultural work in the plurality of fields, the state of planting in the plurality of fields, or the state of weather. Therefore, the agricultural work can be performed more efficiently by the plurality of agricultural machines.

### [Item 13]

A control system, comprising:
the path planning system of any one of items 1 to 12; and
a controller moving the agricultural machine along the path generated by the processing unit.

### [Item 14]

An agricultural machine, comprising:
the control system of item 13; and
a drive device controllable by the controller.

### [Item 15]

A path planning system for an agricultural machine performing self-driving over a plurality of districts, the path planning system comprising:
a storage device to store a map of a region including the plurality of districts; and
a processing unit determining a period when the agricultural machine is to perform agricultural work in each of the plurality of districts, based on information representing a rough guideline for the period for each of the districts for the agricultural work to be performed by the agricultural machine, and generating a path on the map for the agricultural machine such that the agricultural machine performs the agricultural work in the period determined for each district.

According to the above-described configuration, the period at which the agricultural machine is to perform the agricultural work in each district can be determined based on the information representing a rough guideline for the period for the agricultural work for each district, and a path for the agricultural machine can be generated in accordance with the determined period. As a result, the agricultural machine is allowed to perform self-driving along the appropriate path in accordance with the rough guideline for the period for each district.

### [Item 16]

The path planning system of item 15, wherein the processing unit determines a plurality of working days when the agricultural machine is to perform the agricultural work in the period determined for each district, and generates a path for the agricultural machine for each of the working days.

According to this, an appropriate path in accordance with the rough guideline for the period for each district can be generated for each working day.

### [Item 1 7]

The path planning system of item 15 or 16, wherein the processing unit creates a work plan for the agricultural machine over the plurality of working days, based on the information representing a rough guideline for the agricultural work for each district, and generates a path for the agricultural machine for each working day in accordance with the work plan.

According to this, a path for the agricultural machine for each working day can be appropriately generated in accordance with the work plan generated in accordance with the rough guideline for the period for each district,

### [Item 18]

The path planning system of item 17, wherein the processing unit updates the work plan in accordance with at least one of a growing state of crop in the plurality of fields, a state of progress of agricultural work in the plurality of fields, a state of planting in the plurality of fields and a state of weather, and generates a path for the agricultural machine for each working day in accordance with the updated work plan.

According to this, the work plan can be flexibly updated in accordance with at least one of the growing state of crop in the plurality of fields, the state of progress of agricultural work in the plurality of fields, the state of planting in the plurality of fields, or the state of weather, and the path for the agricultural machine for each working day can be optimized.

### [Item 19]

The path planning system of item 17 or 18, wherein:
the map includes information representing a plurality of fields, a plurality of waiting areas and a road connecting the plurality of fields and the plurality of waiting areas to each other in each district, and
the processing unit determines, from the plurality of waiting areas, a specific waiting area to which the agricultural machine is to move after performing a final task of agricultural work on each working day, based on work plan, and generates a path from the field where the final task of agricultural work is to be performed, to the specific waiting area.

According to this, an appropriate waiting area can be determined for each working day based on at least one of the growing state of crop in the plurality of fields, the state of progress of agricultural work in the plurality of fields, the state of planting in the plurality of fields, or the state of weather, and a path from the field where the final task of agricultural work is to be performed on that particular working day to the waiting area can be generated. Therefore, an appropriate waiting area can be determined in accordance with the state of each working day with no need to previously determine the waiting area.

### [Item 20]

The path planning system of any one of items 15 to 19, wherein in the case where the information representing a rough guideline for the period for the agricultural work for each district shows a tendency that the period for the agricultural work is later in a northern district, the processing unit determines the period when the agricultural machine is to perform the agricultural work in each of the plurality of districts, such that the agricultural machine gradually moves north as days go by, in accordance with the tendency.

According to this, in the case where a tendency is shown that the recommended period for the agricultural work is later in a northern district, the agricultural machine is allowed to perform the agricultural work at an appropriate period suitable for the tendency.

### [Item 21]

The path planning system of any one of items 15 to 20, wherein in the case where the information representing a rough guideline for the period for the agricultural work for each district shows a tendency that the period for the agricultural work is later in a southern district, the processing unit determines the period when the agricultural machine is to perform the agricultural work in each of the plurality of districts, such that the agricultural machine gradually moves south as days go by, in accordance with the tendency.

According to this, in the case where a tendency is shown that the recommended period for the agricultural work is later in a southern district, the agricultural machine is allowed to perform the agricultural work at an appropriate period suitable for the tendency.

### [Item 22]

The path planning system of any one of items 15 to 21, wherein the processing unit transmits information representing the generated path, or a command to move the agricultural machine along the path, to the agricultural machine.

According to this, the agricultural machine can move along the appropriate path generated by the processing unit.

### [Item 23]

The path planning system of any one of items 15 to 22, wherein the processing unit generates a path for each of a plurality of agricultural machines including the agricultural machine, such that the plurality of agricultural machines perform the agricultural work in the period determined for each district.

According to this, a path for each agricultural machine can be appropriately generated in accordance with the period for the agricultural work for each district. Therefore, the agricultural work can be performed more efficiently by the plurality of agricultural machines.

### [Item 24]

The path planning system of item 23, wherein the processing unit:
acquires information representing a rough guideline for the period for each of a plurality of types of agricultural work for each district,
determines the period when each of the plurality of agricultural machines respectively assigned to the plurality of types of agricultural work is to perform the type of agricultural work assigned thereto in each district, based on the information, and
generates a path for each agricultural machine such that each agricultural machine performs the type of agricultural work assigned thereto, in the determined period.

According to this, the plurality types of agricultural work can be performed efficiently by the plurality of agricultural machines at the recommended period for the agricultural work for each district.

### [Item 25]

The path planning system of item 24, wherein the processing unit:
acquires, from a plurality of terminal devices used by a plurality of users, information representing a rough plan for each type of agricultural work in one or more fields managed by each of the users,
creates a work plan for each agricultural machine, based on the information representing the rough plan and the acquired information representing the rough guideline for the period for each type of agricultural work for each district, and
generates a path for each agricultural machine for each working day, in accordance with on the work plan.

According to this, an appropriate path can be generated in accordance with, for example, the rough plan for each type of agricultural work created by the user and the rough guideline for the period for the agricultural work for each district.

### [Item 26]

A control system, comprising:
the path planning system of any one of items 15 to 25; and
a controller moving the agricultural machine along the path generated by the processing unit.

### [Item 27]

An agricultural machine, comprising:
the control system of item 26; and
a drive device controllable by the controller.

### [Item 28]

A method performed by a processing unit of a path planning system for an agricultural machine performing self-driving, the method comprising:
acquiring a map including a plurality of fields, a plurality of waiting areas, and a road connecting the plurality of fields and the plurality of waiting areas to each other; and
generating a path on the map for the agricultural machine for each of working days,
wherein the generation of the path includes:
   acquiring information representing at least one of a growing state of crop in the plurality of fields, a state of progress of agricultural work in the plurality of fields, a state of planting in the plurality of fields and a state of weather,
   determining, from the plurality of waiting areas, a specific waiting area to which the agricultural machine is to move after performing a final task of agricultural work on each working day, based on the information; and
   generating a path from the field where the final task of agricultural work is to be performed, to the specific waiting area.

### [Item 29]

A method performed by a processing unit of a path planning system for an agricultural machine performing self-driving over a plurality of districts, the method comprising:
acquiring a map of a region including the plurality of districts;
acquiring information representing a rough guideline for a period for each of the districts for agricultural work to be performed by the agricultural machine,
determining the period when the agricultural machine is to perform the agricultural work in each of the plurality of districts, based on information; and
generating a path on the map for the agricultural machine such that the agricultural machine performs the agricultural work in the period determined for each district.

### INDUSTRIAL APPLICABILITY

The techniques according to the present disclosure are applicable to a path planning system for agricultural machines, such as tractors, harvesters, rice transplanters, vehicles for crop management, vegetable transplanters, mowers, seeders, spreaders, or agricultural robots, for example.

### REFERENCE SIGNS LIST

**30:** global path, **32:** local path; **40:** obstacle; **50:** GNSS satellite; **60:** reference station; **70:** field; **72:** work area; **74:** headland; **76:** road; **80:** network; **90:** waiting area; **100:** agricultural machine; **101:** vehicle body; **102:** prime mover (engine); **103:** transmission; **104:** wheel; **105:** cabin; **106:** steering device; **107:** driver's seat; **108:** linkage device; **110:** positioning device; **111:** GNSS receiver; **112**: RTK receiver; **115:** inertial measurement unit (IMU); **116:** processing circuit; **120:** camera; **130:** obstacle sensor; **140:** LiDAR sensor; **150:** sensors; **152:** steering wheel sensor; **154:** angle-of-turn sensor **154; 156:** rotation sensor; **160:** control system; **170:** storage device **170; 180:** controller; **181-186:** ECU; **190:** communication device; **200:** operational terminal; **210:** operation switches; **220:** buzzer; **240:** drive device; **300:** implement; **340:** drive device; **380:** controller; **390:** communication device; **400:** terminal device; **420:** input device; **430:** display device; **450:** storage device; **460:** processor; **470:** ROM; **480:** RAM; **490:** communication device; **600:** management device; **660:** processor; **670:** storage device; **670:** ROM; **680:** RAM; **690:** communication device

## Claims

1. A path planning system for an agricultural machine performing self-driving, the path planning system comprising:
a storage device to store a map including a plurality of fields, a plurality of waiting areas, and a road connecting the plurality of fields and the plurality of waiting areas to each other; and
a processing unit to generate a path on the map for the agricultural machine for each of working days,
wherein the processing unit:
determines, from the plurality of waiting areas, a specific waiting area to which the agricultural machine is to move after performing a final task of agricultural work on each working day, based on information representing at least one of a growing state of crop in the plurality of fields, a state of progress of agricultural work in the plurality of fields, a state of planting in the plurality of fields and a state of weather, and
generates a path from the field where the final task of agricultural work is to be performed, to the specific waiting area.

2. The path planning system of claim 1, wherein the processing unit:
determines a distribution of the working days in fields in the vicinity of each of the plurality of waiting areas, based on at least one of the growing state of crop, the state of progress of agricultural work, the state of planting, or the state of weather, and
determines the specific waiting area for each working day, based on the distribution of the working days.

3. The path planning system of claim 2, wherein for determining the specific waiting area for each working day, the processing unit specifies a group of fields where the agricultural work is to be performed on a next working day, based on the distribution of the working days, and determines a waiting area closest to the group of fields as the specific waiting area.

4. The path planning system of claim 2, wherein for determining the specific waiting area for each working day, the processing unit determines a waiting area closest to a first field where the final task of agricultural work is to be performed on the working day, or a waiting area closest to a second field where a first task of agricultural work is to be performed on the next working day specified from the distribution of the working days, as the specific waiting area.

5. The path planning system of claim 4, wherein the processing unit determines, as the specific waiting area, the one between the waiting area closest to the first field and the waiting area closest to the second field that results in a shorter travel distance for the agricultural machine when moving from the first field to the second field via the waiting area.

6. The path planning system of any one of claims 2 to 5, wherein the processing unit updates the distribution of the working days in accordance with the growing state of crop in the plurality of fields.

7. The path planning system of any one of claims 2 to 6, wherein the processing unit updates the distribution of the working days in accordance with the state of progress of agricultural work in the plurality of fields.

8. The path planning system of any one of claims 2 to 7, wherein the processing unit updates the distribution of the working days in accordance with the state of planting in the plurality of fields.

9. The path planning system of any one of claims 2 to 8, wherein the processing unit updates the distribution of the working days in accordance with the state of weather in a district where each of the plurality of waiting areas is located.

10. The path planning system of any one of claims 1 to 9, wherein for determining the specific waiting area for each working day, the processing unit obtains the information from a management device managing at least one of the growing state of crop, the state of progress of agricultural work, the state of planting, or the state of weather.

11. The path planning system of any one of claims 1 to 10, wherein the processing unit transmits information representing the generated path, or a command to move the agricultural machine along the path, to the agricultural machine.

12. The path planning system of any one of claims 1 to 11, wherein the processing unit:
generates a path for a plurality of agricultural machines including the agricultural machine for each working day,
determines, from the plurality of waiting areas, a specific waiting area to which each of the agricultural machines moves after performing the final task of agricultural work on each working day, based on the information representing at least one of the growing state of crop in the plurality of fields, the state of progress of agricultural work in the plurality of fields, the state of planting in the plurality of fields, or the state of weather, and
generates a path from the field where the final task of agricultural work is to be performed, to the specific waiting area, for each of the agricultural machines.

13. A control system, comprising:
the path planning system of any one of claims 1 to 12; and
a controller moving the agricultural machine along the path generated by the processing unit.

14. An agricultural machine, comprising:
the control system of claim 13; and
a drive device controllable by the controller.

15. A path planning system for an agricultural machine performing self-driving over a plurality of districts, the path planning system comprising:
a storage device to store a map of a region including the plurality of districts; and
a processing unit determining a period when the agricultural machine is to perform agricultural work in each of the plurality of districts, based on information representing a rough guideline for the period for each of the districts for the agricultural work to be performed by the agricultural machine, and generating a path on the map for the agricultural machine such that the agricultural machine performs the agricultural work in the period determined for each district.

16. The path planning system of claim 15, wherein the processing unit determines a plurality of working days when the agricultural machine is to perform the agricultural work in the period determined for each district, and generates a path for the agricultural machine for each of the working days.

17. The path planning system of claim 15 or 16, wherein the processing unit creates a work plan for the agricultural machine over the plurality of working days, based on the information representing a rough guideline for the agricultural work for each district, and generates a path for the agricultural machine for each working day in accordance with the work plan.

18. The path planning system of claim 17, wherein the processing unit updates the work plan in accordance with at least one of a growing state of crop in the plurality of fields, a state of progress of agricultural work in the plurality of fields, a state of planting in the plurality of fields and a state of weather, and generates a path for the agricultural machine for each working day in accordance with the updated work plan.

19. The path planning system of claim 17 or 18, wherein:
the map includes information representing a plurality of fields, a plurality of waiting areas and a road connecting the plurality of fields and the plurality of waiting areas to each other in each district, and
the processing unit determines, from the plurality of waiting areas, a specific waiting area to which the agricultural machine is to move after performing a final task of agricultural work on each working day, based on work plan, and generates a path from the field where the final task of agricultural work is to be performed, to the specific waiting area.

20. The path planning system of any one of claims 15 to 19, wherein in the case where the information representing a rough guideline for the period for the agricultural work for each district shows a tendency that the period for the agricultural work is later in a northern district, the processing unit determines the period when the agricultural machine is to perform the agricultural work in each of the plurality of districts, such that the agricultural machine gradually moves north as days go by, in accordance with the tendency.

21. The path planning system of any one of claims 15 to 20, wherein in the case where the information representing a rough guideline for the period for the agricultural work for each district shows a tendency that the period for the agricultural work is later in a southern district, the processing unit determines the period when the agricultural machine is to perform the agricultural work in each of the plurality of districts, such that the agricultural machine gradually moves south as days go by, in accordance with the tendency.

22. The path planning system of any one of claims 15 to 21, wherein the processing unit transmits information representing the generated path, or a command to move the agricultural machine along the path, to the agricultural machine.

23. The path planning system of any one of claims 15 to 22, wherein the processing unit generates a path for each of a plurality of agricultural machines including the agricultural machine, such that the plurality of agricultural machines perform the agricultural work in the period determined for each district.

24. The path planning system of claim 23, wherein the processing unit:
acquires information representing a rough guideline for a period for each of a plurality of types of agricultural work for each district,
determines the period when each of the plurality of agricultural machines respectively assigned to the plurality of types of agricultural work is to perform the type of agricultural work assigned thereto in each district, based on the information, and
generates a path for each agricultural machine such that each agricultural machine performs the type of agricultural work assigned thereto, in the determined period.

25. The path planning system of claim 24, wherein the processing unit:
acquires, from a plurality of terminal devices used by a plurality of users, information representing a rough plan for each type of agricultural work in one or more fields managed by each of the users,
creates a work plan for each agricultural machine, based on the information representing the rough plan and the acquired information representing the rough guideline for the period for each type of agricultural work for each district, and
generates a path for each agricultural machine for each working day, in accordance with on the work plan.

26. A control system, comprising:
the path planning system of any one of claims 15 to 25; and
a controller moving the agricultural machine along the path generated by the processing unit.

27. An agricultural machine, comprising:
the control system of claim 26; and
a drive device controllable by the controller.
